# EUROPEAN PATENT SPECIFICATION

(11) **EP 2 643 202 B1**
(45) Date of publication and mention of the grant of the patent: **07.01.2015**
(21) Application number: 11794248.2
(22) Date of filing: 21.11.2011
(51) Int. Cl.: B62K 25/28, B62K 11/10

(54) **TWO-WHEELED ELECTRIC VEHICLE**
ZWEIRÄDRIGES ELEKTROFAHRZEUG
VÉHICULE ÉLECTRIQUE À DEUX ROUES

(30) Priority: 22.11.2010 JP 2010260633
(43) Date of publication of application: 02.10.2013
(73) Proprietor: Yamaha Hatsudoki Kabushiki Kaisha, Iwata-shi, Shizuoka 438-8501 (JP)
(72) Inventor: TERADA, Junji, Iwata-shi Shizuoka 438-8501 (JP); SOUMA, Yousuke, Iwata-shi Shizuoka 438-0026 (JP)
(74) Representative: Grünecker, Kinkeldey, Stockmair & Schwanhäusser
(86) International application number: PCT/JP2011/006473
(87) International publication number: WO 2012/070223

(56) References cited:
- EP-A1- 2 168 862
- FR-A1- 2 735 076
- JP-A- 6 219 359
- JP-A- 2004 074 911

## Description

### Technical Field

This invention relates to a two-wheeled electric vehicle **according to the preamble of independent claim 1. Such a two-wheeled vehicle can be taken from the prior art document** JP-A-2004-74911 **(PTL 2).**

### Background Art

Recently, a scooter type two-wheeled electric vehicle has been developed. Such a two-wheeled electric vehicle includes a battery, an electric motor to which the electric power of the battery is supplied, and a rear wheel driven by the electric motor (see Patent Documents 1 and 2, for example). In the two-wheeled electric vehicle, the distance that the vehicle can travel on a single charge is influenced by a battery capacity. The distance that the vehicle can travel on a single charge can be made longer in proportion to an increase in capacity of the battery. It is recommended to make the size of the battery larger in order to increase the battery capacity.

### Citation List

### Patent Literature

PTL 1: JP-A-1994-219359
PTL 2: JP-A-2004-74911

### Summary of Invention

### Technical Problem

However, the two-wheeled electric vehicle is greatly limited in space that allows vehicle components to be disposed, so that its battery cannot be needlessly enlarged. In more detail, in Patent Document 1, a battery is disposed below a foot board on which a driver places his/her feet. In order to enlarge the battery disposed below the foot board in the vehicle up-down direction, this structure is required to heighten the position of the foot board. If the position of the foot board is heightened, the position of a seat is also required to be heightened in accordance with the position of the foot board. If the position of the seat is heightened, the upper surface of the seat (seating surface) becomes distant from the ground. This impairs ride quality, i.e., impairs an easy mount/dismount onto/from the two-wheeled electric vehicle or impairs an easy touchdown of driver's feet on the ground when the vehicle is stopped. Additionally, if the battery disposed below the foot board is enlarged in the vehicle front-back direction, a wheelbase becomes long. Therefore, the battery disposed below the foot board cannot be enlarged.

On the other hand, in Patent Document 2, a battery is disposed only below a seat. Therefore, there is no need to heighten the position of a foot board when the battery is enlarged.

Additionally, the height of the seat is sufficiently greater than that of the foot board from the ground. Therefore, a comparatively large battery can be disposed by being placed in a vertical direction (i.e., in a vertically-long manner). Moreover, heavy components can be concentratively disposed at the center in the vehicle front-rear direction by disposing the battery, which is a heavy component, below the seat. As a result, the load of the two-wheeled electric vehicle is applied onto front and rear wheels evenly, and therefore the two-wheeled electric vehicle can be easily driven and can be more easily handled when the two-wheeled electric vehicle travels and when the two-wheeled electric vehicle is moved in a state in which the driver has dismounted from the two-wheeled electric vehicle.

A structure in which the battery is disposed below the seat has the above-mentioned advantages that are greater than a structure in which the battery is disposed below the foot board.

In the two-wheeled electric vehicle having the battery vertically placed below the seat, it is necessary to upwardly extend the battery vertically placed therebelow or to downwardly extend this battery in order to enlarge the battery. Although it is also conceivable that the battery is enlarged in the width direction of the vehicle, a basal frame is located beside the battery in the two-wheeled electric vehicle of Patent Document 2, and therefore the battery has difficulty in being enlarged in the width direction of the vehicle.

If the battery is extended upwardly, the position of the seat is also required to be heightened in accordance with the position of the upper end of the battery. However, if the position of the seat is heightened, it becomes difficult for a driver to bring his/her feet into contact with the ground, and a ride quality will be impaired. On the other hand, in the two-wheeled electric vehicle of Patent Document 2, the battery cannot be extended downwardly. The reason is that a pivot shaft is disposed below the lower surface of the battery. The pivot shaft is a swing center of a swing unit including the electric motor and the rear wheel, and, if the battery is extended downwardly, the lower end of the battery comes into contact with the pivot shaft.

Therefore, it is conceivable that the pivot shaft is disposed behind the battery. Accordingly, it is conceivable that the battery is extended downwardly. However, if the position of the pivot shaft is deviated rearwardly, the position of the swing unit connected to the pivot shaft is deviated rearwardly. As a result, the distance (wheelbase) between the front wheel and the rear wheel becomes long, and the overall length of the two-wheeled electric vehicle becomes long. Undesirably, the long overall length of the two-wheeled electric vehicle impairs the advantage of the two-wheeled electric vehicle that can be easily handled because it is a small-sized vehicle.

Additionally, if the battery is enlarged, the battery becomes heavy. In order to reliably fix this heavy battery to a vehicle body frame, the battery is required to be supported by a sturdy bracket fixed to the vehicle body frame. Especially, if the battery is a heavy one, a structure in which the battery is supported in such a way as to be raised by supporting a lower part of the battery with the bracket is preferable to a structure in which the battery is suspended by supporting an upper part of the battery with the bracket.

However, a sturdy bracket is usually large in size. If the vehicle is structured so as to support the battery from below with this large-sized bracket, the bracket greatly protrudes downwardly with respect to the vehicle body frame.

Therefore, the position of the bracket is required to be made higher. However, even if the position of the bracket is heightened, the position of the upper end of the battery cannot be changed, and therefore the length in the up-down direction of the battery is required to be shortened. Therefore, a battery capacity becomes small.

Hence, it is not easy to enlarge the battery that is a heavy component disposed below the seat without impairing the ride quality of the vehicle and its easy handling and without increasing the overall length of the vehicle.

It is therefore an object of the present invention to provide a two-wheeled electric vehicle capable of enlarging a battery that is a heavy component disposed below a seat without impairing the ride quality of the vehicle and its easy handling and without increasing the overall length of the vehicle.

### Solution to Problem

The invention according to Claim 1 to achieve the above-mentioned object is a two-wheeled electric vehicle (1), and this two-wheeled electric vehicle (1) includes a front wheel (3); a vehicle body frame (2) including a left-and-right pair of first frame parts (21) that are disposed below an upper end (3a) of the front wheel behind the front wheel and that extend in a vehicle front-rear direction (X1), a left-and-right pair of second frame parts (22) that extend from the left-and-right pair of first frame parts rearwardly obliquely upwardly, and a left-and-right pair of third frame parts (23) that extend from the left-and-right pair of second frame parts rearwardly; a seat (37) supported by the vehicle body frame; a feet-putting part (34) on which feet of a driver are put, the feet-putting part (34) being disposed between the first frame parts and the upper end of the front wheel in a vehicle up-down direction and being disposed between the seat and the front wheel in the vehicle front-rear direction; a battery(6), the battery (6) being formed in a substantially rectangular shape whose length (L2) in the vehicle up-down direction (Z1) is greater than a length (L1) in the vehicle front-rear direction in a side view, the battery (6) being disposed between the left-and-right pair of second frame parts below the seat and being disposed so that a lower end (6t) of the battery is located below an upper end (34b) of the feet-putting part in a posture inclined so that an upper part (6a) of the battery is located at a more rearward position than a lower part (6b) of the battery; a battery supporting part (130), the battery supporting part (130) being supported by the vehicle body frame, the battery supporting part supporting the lower part of the battery, at least one part of the battery supporting part being disposed below the upper end of the feet-putting part; a swing unit (71) including an electric motor (5) to which electric power is supplied from the battery, and a rear wheel (4) that is driven by the electric motor and that is disposed below the third frame parts; and a pivot part (74) that swingably connects the swing unit to the vehicle body frame at a higher position than the feet-putting part. At least one part of the battery supporting part is disposed in a first region (F1) surrounded by a first vertical plane (V1) that passes through a front end (6u) of the battery, by a horizontal plane (H1) that passes through the lower end of the battery, and by the battery in a side view. The pivot part is disposed in a second region (F2) surrounded by a second vertical plane (V2) that passes through a rear end (6w) of the battery, by the horizontal plane, and by the battery in a side view.

In this section, alphanumeric characters in parentheses represent reference signs of corresponding components, respectively, in the embodiments described later, and, however, the invention is not limited by these reference signs.

According to this structure, the battery is disposed in a posture inclined rearwardly obliquely upwardly. Therefore, the height of the battery (i.e., the length of the battery in the direction in which the battery is inclined) can be increased without increasing the height of the battery in the vehicle up-down direction. Therefore, the battery can be enlarged, and the position of the seat is not required to be heightened, and the ride quality of the vehicle can be improved, i.e., an easy mount/dismount onto/from the two-wheeled electric vehicle can be realized, and an easy touchdown of driver's feet on the ground when the vehicle is stopped can be realized.

Additionally, the battery supporting part supports the lower part of the battery. Therefore, even if the battery is heavy and large in size, the battery can be firmly supported, and therefore the large-sized battery can be mounted in the two-wheeled electric vehicle. Additionally, the position of the battery supporting part and the position of the battery can be allowed to coincide with each other in the vehicle up-down direction by disposing at least one part of the battery supporting part in the first region. Therefore, the battery unit composed of the battery supporting part and the battery can be shortened in the vehicle up-down direction. Therefore, the projection amount of the battery supporting part protruding downwardly with respect to the battery can be reduced, and therefore the battery supporting part that is strongly-built resulting from its large size can be disposed, and the battery can be enlarged. Accordingly, the arrangement space for the battery supporting part is secured not only by allowing the battery to assume an inclined posture but also by using the first region created by inclining the battery. Therefore, it becomes possible to realize the synergistic effect of the enlargement of the battery resulting from the inclination arrangement of the battery and the further enlargement of the battery resulting from the effective utilization of the space produced by this inclination arrangement.

Additionally, the whole of the battery supporting part can be disposed at a lower position in proportion to a decrease in the projection amount of the battery supporting part protruding below the battery. The feet-putting part is not required to be disposed at a high position in order to avoid the battery supporting part because the battery supporting part is disposed at a low position. Therefore, the feet-putting part can be disposed at a lower position. As a result, the height of the feet-putting part from the road surface can be lowered, and therefore the ride quality of the vehicle can be further improved. Therefore, an effect by which the height of the feet-putting part from the road surface can be made lower can be fulfilled by a combination of a structure in which the battery is not disposed below the feet-putting part and a structure in which the battery supporting part is disposed at a lower position.

Additionally, the position of the pivot part and the position of the battery can be allowed to coincide with each other in the vehicle front-rear direction by disposing the pivot part in the second region. As a result, the pivot part can be disposed at a more forward position. Therefore, the swing unit connected to the pivot part can be disposed at a more forward position. As a result, the overall length of the two-wheeled electric vehicle can be made shorter. In other words, the present invention adopts an arrangement in which the battery is disposed in an inclined posture and an arrangement in which the pivot part is disposed in the second region obtained by the arrangement of the inclined battery. This makes it possible to fulfill an excellent synergistic effect that enables the simultaneous realization of two different effects, i.e., an effect by which the battery can be enlarged without sacrificing its ride quality and an effect by which the overall length of the two-wheeled electric vehicle can be shortened. Moreover, heavy components can be concentratively disposed at a substantially central position in the vehicle front-rear direction by placing the battery, which is a heavy component, below the seat. As a result, the load of the two-wheeled electric vehicle evenly acts on the front wheel and the rear wheel, and therefore the two-wheeled electric vehicle can be easily driven, and can be more easily handled when the two-wheeled electric vehicle travels and when a driver moves the two-wheeled electric vehicle in a state in which the driver has dismounted from the two-wheeled electric vehicle.

Therefore, structural elements of the two-wheeled electric vehicle, such as a structure in which the battery is disposed in an inclined state, a structure in which the battery supporting part is disposed in the first region, and a structure in which the pivot part is disposed in the second region, act in combination with each other as a whole. As a result, many excellent effects, such as the enlargement of the battery, the improvement in the ride quality of the vehicle, the simplification of the handling of the vehicle, and the shortening of the overall length of the vehicle, can be fulfilled synergistically.

The invention according to Claim 2 is the two-wheeled electric vehicle according to Claim 1 in which an inclination angle (theta 1) of the battery with respect to the horizontal plane is greater than an inclination angle (theta 2) of each of the second frame parts with respect to the horizontal plane in a side view.

According to this structure, the length of the battery in the vehicle front-rear direction can be shortened. Therefore, the overall length of the two-wheeled electric vehicle can be made shorter.

The invention according to Claim 3 is the two-wheeled electric vehicle according to Claim 1 or 2 in which the battery includes a front region (131) disposed in front of the pair of second frame parts and a rear region (132) that is disposed behind the pair of second frame parts and that has an area greater than an area of the front region in a side view.

According to this structure, the synergistic effect of the advantage that the battery can be enlarged and the advantage that the wheelbase of the two-wheeled electric vehicle can be shortened can be fulfilled from a combination of a structure in which the pivot shaft is disposed in the first region in a side view and a structure in which the area of the rear region is greater than that of the front region in a side view.

The invention according to Claim 4 is the two-wheeled electric vehicle according to any one of Claims 1 to 3 in which the swing unit includes a casing (88) that houses the electric motor and an inclined part (89) that extends from a front (88a) of the casing forwardly obliquely upwardly and that is connected to the pivot part, and an inclination angle (theta 3) of the inclined part with respect to the horizontal plane is greater than the inclination angle of the second frame part with respect to the horizontal plane.

According to this structure, the swing unit can be more disposed in the second region. Therefore, the swing unit can be disposed at a more forward position. As a result, the overall length of the two-wheeled electric vehicle can be made shorter.

The invention according to Claim 5 is the two-wheeled electric vehicle according to any one of Claims 1 to 4 in which the swing unit includes a casing that houses the electric motor and a connection part (89) that extends from a front of the casing upwardly and that is connected to the pivot part, and the connection part is located behind a forward end (88b) of the casing, and at least one part of the connection part is located in front of the rear end of the battery.

According to this structure, the length of the two-wheeled electric vehicle in the vehicle front-rear direction can be made compact while sufficiently securing a space for containing the electric motor by securing the length of the casing in the vehicle front-rear direction.

The invention according to Claim 6 is the two-wheeled electric vehicle according to any one of Claims 1 to 5 in which the vehicle body frame includes a left-and-right pair of fourth frame parts (24) disposed below the pair of third frame parts, and the pair of fourth frame parts include a front end part (24a) connected to the pair of second frame parts, a rear end part (24b) connected to the pair of third frame parts, a first intermediate part (24c) that is aligned with the battery in a vehicle right-left direction (Y1), and a second intermediate part (72) that is disposed behind the first intermediate part and to which the pivot part is connected.

According to this structure, an arrangement in which the battery is placed between the left-and-right pair of second frame parts can be realized, and the pivot part disposed apart from the second frame part can be connected by the fourth frame part. Therefore, the pivot part can be disposed without being restricted by the arrangement of the second frame parts.

The invention according to Claim 7 is the two-wheeled electric vehicle according to any one of Claims 1 to 6 that further includes a seat bracket (100) used to attach the seat to the pair of second frame parts, in which at least one part of the seat bracket is disposed in a third region (F3) surrounded by a horizontal plane (H2) that passes through an upper end (6s) of the battery, by the first vertical plane, and by the battery in a side view.

According to this structure, at least one part of the bracket is disposed in the third region obtained by placing the battery in an inclined state. Therefore, the projection amount of the seat bracket protruding forwardly with respect to the battery can be reduced. Therefore, a space around the battery can be used more effectively. As a result, the overall length of the two-wheeled electric vehicle can be made shorter. Additionally, a wide space can be secured in front of the seat, and therefore a space in which driver's feet are put can be made wider. Therefore, the ride quality of the driver can be further improved. In other words, different effects, i.e., the shortening of the overall length of the two-wheeled electric vehicle and the improvement in the ride quality of the driver can be simultaneously fulfilled.

The invention according to Claim 8 is the two-wheeled electric vehicle according to any one of Claims 1 to 7 that further includes a stand device (135) used to maintain the two-wheeled electric vehicle in a standing posture in a state in which the front wheel and the rear wheel are in contact with a road surface (A1), in which the stand device includes a spindle (140) that is supported by the vehicle body frame below the feet-putting part and that extends in a vehicle right-left direction, and a stand member (138) having a contact member (143) displaceable to a contact position being in contact with the road surface and displaceable to a separation position separated from the road surface by being displaced around the spindle, and in which the contact member occupying the contact position is located between a straight line (D1) that passes through a forward edge of the battery and a straight line (D2) that passes through a rearward edge of the battery in a side view.

According to this structure, the position of the contact member being in contact with the ground in the vehicle front-rear direction can be set so as not to become too close to the front wheel and so as not to become too close to the rear wheel. Therefore, a stably standing posture of the two-wheeled electric vehicle can be maintained by the stand device, the front wheel, and the rear wheel.

The invention according to Claim 9 is the two-wheeled electric vehicle according to Claim 8 in which the stand member has a U shape including a first part (141) that is connected to the spindle and that extends in a vehicle right-left direction and a pair of second parts (142) extending from both ends of the first part toward a rear of the vehicle, and the battery is disposed between the pair of second parts in the vehicle right-left direction in a plan view.

According to this structure, the stand member is disposed so as to avoid the battery. Therefore, the battery can be made longer downwardly and can be made greater in size without being obstructed by the stand member.

### Brief Description of Drawings

[fig.1]FIG. 1 is a left side view of a two-wheeled electric vehicle according to a first embodiment of the present invention.
[fig.2]FIG. 2 is a left side view showing a state in which some components, such as a vehicle body cover of the two-wheeled electric vehicle, have been removed.
[fig.3]FIG. 3 is a perspective view of a vehicle body frame.
[fig.4A]FIG. 4A is an exploded perspective view of a battery and shows a state of the battery viewed from frontally above the battery.
[fig.4B]FIG. 4B is a perspective view of the battery viewed from frontally above the battery.
[fig.5A]FIG. 5A is an enlarged view showing surroundings of the battery of FIG. 2.
[fig.5B]FIG. 5B is a perspective view of a main part around the battery viewed from frontally below.
[fig.6A]FIG. 6A is a front view of a first bracket.
[fig.6B]FIG. 6B is a left side view of the first bracket.
[fig.7]FIG. 7 is a left side view of the main part around the battery of the two-wheeled electric vehicle, for describing a relationship among the battery, a battery supporting device, and the vehicle body frame.
[fig.8]FIG. 8 is a sectional view of the main part along the line VIII-VIII of FIG. 7, showing a state viewed from above.
[fig.9]FIG. 9 is a perspective view showing a connection state between a seat supporting part and a seat, the seat supporting part being viewed from left behind.
[fig.10A]FIG. 10A is a plan view of an upper second bracket.
[fig.10B]FIG. 10B is a front view of the upper second bracket.
[fig.10C]FIG. 10C is a left side view of the upper second bracket.
[fig.11]FIG. 11 is a perspective view of the main part of the two-wheeled electric vehicle viewed from before.
[fig.12A]FIG. 12A is a plan view of a left upper second seat part.
[fig.12B]FIG. 12B is a left side view of the left upper second seat part.
[fig.13A]FIG. 13A is a plan view of a right upper second seat part.
[fig.13B]FIG. 13B is a right side view of the right upper second seat part.
[fig.14]FIG. 14 is an enlarged view of a part of FIG. 11, showing surroundings of the upper part of the battery.
[fig.15]FIG. 15 is a sectional view along the line XV-XV of FIG. 7, showing a state of the upper second bracket and the upper second seat part viewed from above.
[fig.16A]FIG. 16A is a plan view of a lower second bracket.
[fig.16B]FIG. 16B is a front view of the lower second bracket.
[fig.17A]FIG. 17A is a plan view of a left supporting unit.
[fig.17B]FIG. 17B is a left side view of the left supporting unit.
[fig.17C]FIG. 17C is a front view of the left supporting unit.
[fig.18A]FIG. 18A is a plan view of the right supporting unit.
[fig.18B]FIG. 18B is a left side view of the left supporting unit.
[fig. 18C]FIG. 18C is a front view of the right supporting unit.
[fig.19]FIG. 19 is a sectional view of the main part along the line XIX-XIX of FIG. 7, showing a state of the lower second bracket and a lower second seat part viewed from above.
[fig.20]FIG. 20 is a perspective view of a main part around a subframe, showing the subframe viewed from rearwardly obliquely below.
[fig.21]FIG. 21 is a perspective view showing a state in which the battery has been detached from the vehicle body frame, viewed from obliquely before.
[fig.22A]FIG. 22A is a perspective view of the main part for describing a battery attaching operation and a battery detaching operation.
[fig.22B]FIG. 22B is a perspective view of the main part for describing the battery attaching operation and the battery detaching operation.
[fig.23]FIG. 23 is a perspective view showing a connecting mechanism and a front end of a swing unit.
[fig.24]FIG. 24 is a partially sectional view of the connecting mechanism and the front end of the swing unit, viewed from above.
[fig.25]FIG. 25 is a left side view of the main part for describing a layout around the battery in a side view.
[fig.26]FIG. 26 is a left side view of a main part according to a second embodiment of the present invention, showing a state in which a vehicle body cover and other components have been detached.
[fig.27]FIG. 27 is a perspective view of a stand member.
[fig.28]FIG. 28 is a plan view of the main part around the stand member.
[fig.29]FIG. 29 is a left side view of a main part according to another embodiment of the present invention.

### Description of Embodiments

### <First Embodiment>

A first embodiment of the present invention will be hereinafter described in detail with reference to the drawings.

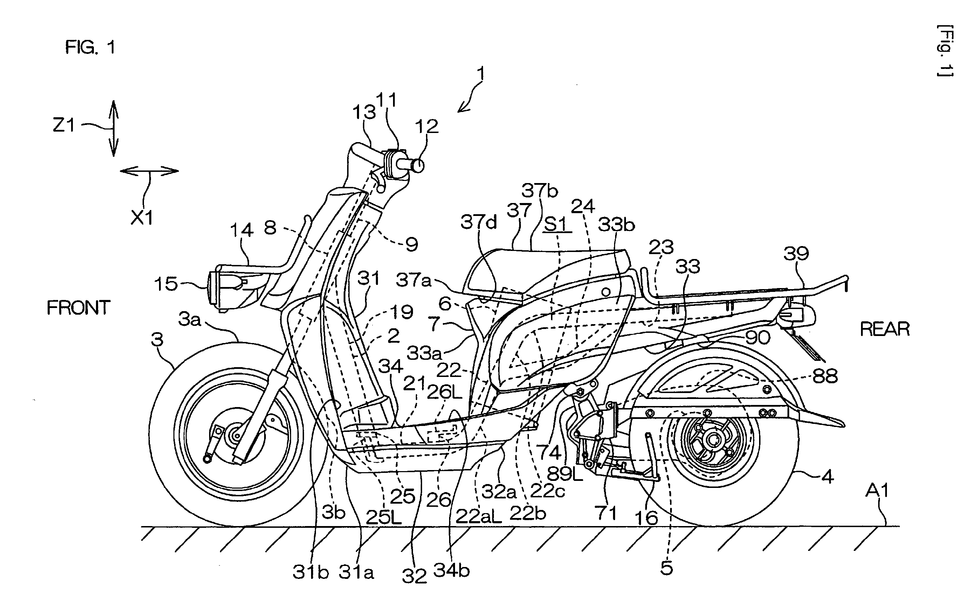

FIG. 1 is a left side view of a two-wheeled electric vehicle 1 according to a first embodiment of the present invention. In this embodiment, the two-wheeled electric vehicle 1 is a scooter. The two-wheeled electric vehicle 1 can travel while placing freight on its front part and on its rear part, and is suitable for use as a freight vehicle.

Each of forward and rearward directions, upward and downward directions, and rightward and leftward directions mentioned in the following description is based on the point of view of a driver (who drives the vehicle) when the two-wheeled electric vehicle 1 is in a basic posture that corresponds to a state of traveling straight on a horizontal plane and when the driver faces forward. A structure of the two-wheeled electric vehicle 1 will be described based on the two-wheeled electric vehicle 1 being in a state in which the vehicle vertically stands up, a state in which a front wheel 3 and a rear wheel 4 are grounded on a road surface A1, and a state in which the driver is not riding thereon.

The two-wheeled electric vehicle 1 is composed of a vehicle body frame 2, the front wheel 3, the rear wheel 4, an electric motor 5, a battery 6, and a vehicle body cover 7. In the two-wheeled electric vehicle 1, the electric motor 5 is driven by electric power supplied from the battery 6 to the electric motor 5, and the rear wheel 4 is driven by an output produced by the electric motor 5. A swing unit 71 including the rear wheel 4 can swing around a first pivot shaft 74. The swing unit 71 additionally includes the electric motor 5 and a motor case 88 containing the electric motor 5. The motor case 88 is one example of a "casing" of the present invention. A main stand 16 that supports the rear wheel 4 while floating the rear wheel 4 is attached to the motor case 88. The entire structure of the two-wheeled electric vehicle 1 will be hereinafter described in order from the forward part of a vehicle body.

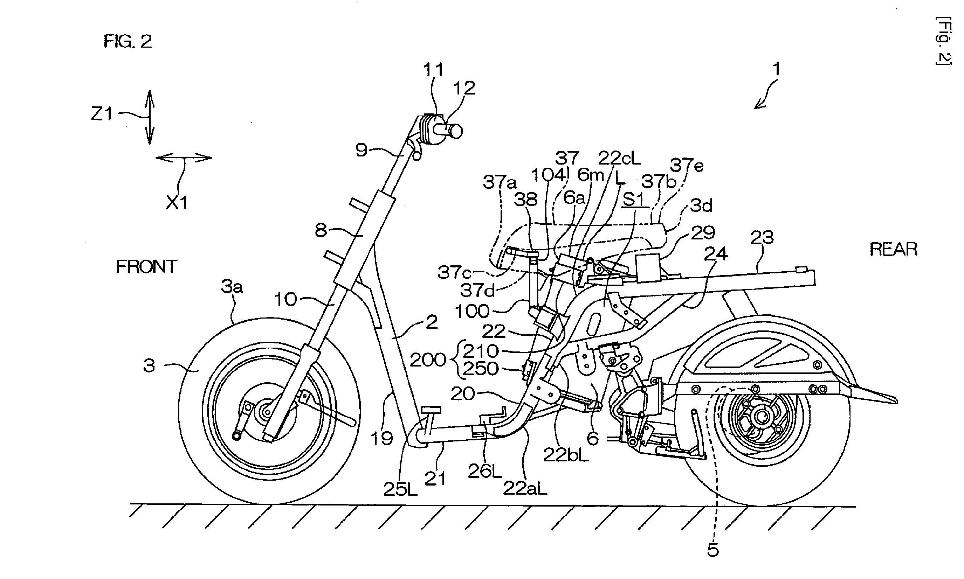

FIG. 2 is a left side view of the two-wheeled electric vehicle 1 from which some components, such as the vehicle body cover 7, have been detached. Hereinafter, parts of the drawings are shown by alternate long and two short dashed lines that is an imaginary line if necessary. The two-wheeled electric vehicle 1 has a head tube 8 disposed at the forward upper part of the two-wheeled electric vehicle 1. A steering shaft 9 is rotatably inserted in the head tube 8. A left-and-right pair of front forks 10 are attached to the lower end of the steering shaft 9. The front wheel 3 is attached to the front forks 10.

A handle 11 is attached to the upper end of the steering shaft 9. A driver can rotate the steering shaft 9, the front forks 10, and the front wheel 3 around the axis line of the steering shaft 9 by operating the handle 11.

Grips 12 are disposed at right and left ends of the handle 11, respectively (only the left grip is shown in the figure). The right grip serves as a throttle grip. The driver can adjust an output produced by the electric motor 5 by rotating the throttle grip.

As shown in FIG. 1, a meter 13 is disposed near the center of the handle 11. A loading platform 14 is disposed below the meter 13. The loading platform 14 is fixed to the head tube 8. The load of pieces of freight piled on the loading platform 14 acts chiefly on the front wheel 3 via the head tube 8, the steering shaft 9, etc. A head lamp 15 is fixed to the lower part of the loading platform 14.

As shown in FIG. 2, the two-wheeled electric vehicle 1 includes the vehicle body frame 2 extending rearwardly from the head tube 8. The vehicle body frame 2 is formed by use of a steel-made pipe member or the like. The vehicle body frame 2 is composed of a front frame 19 and a frame main body 20 disposed behind the front frame 19. The front frame 19 extends from the lower part of the head tube 8 rearwardly obliquely downwardly. In a side view, the frame main body 20 extends rearwardly from the lower end of the front frame 19, and has the shape of the capital letter S.

The frame main body 20 is composed of a first left-and-right pair of frame parts 21, a second left-and-right pair of frame parts 22, a third left-and-right pair of frame parts 23, and a fourth left-and-right pair of frame parts 24.

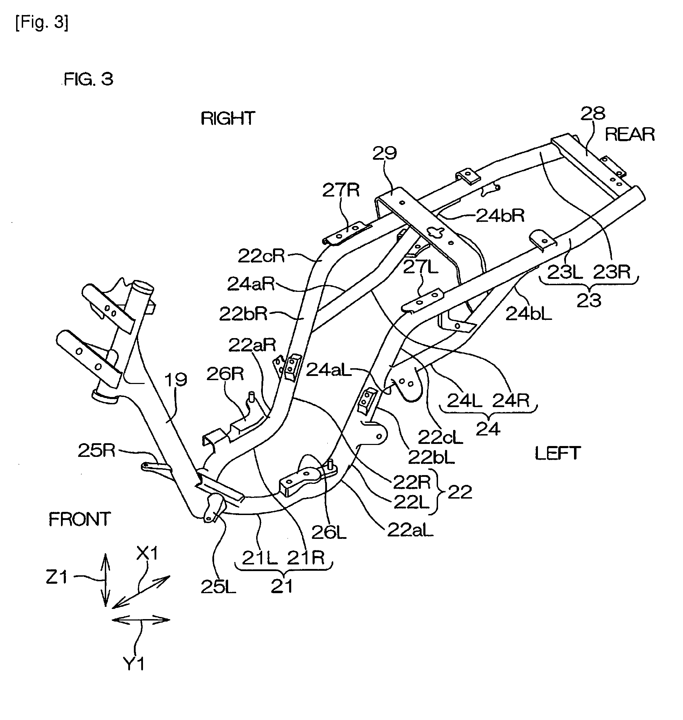

FIG. 3 is a perspective view of the vehicle body frame 2. The first frame part 21 consists of a left first frame part 21L and a right first frame part 21R. Hereinafter, reference characters "L, R," such as "21L, 21R," are given to a left-and-right pair of members, respectively, if necessary. When these members are generically mentioned, a reference character, such as "21," consisting only of a numeral is given without giving reference characters "L, R." In this embodiment, the left first frame part 21L and the right first frame part 21R are shaped laterally symmetrically.

The left first frame part 21L is shaped so as to extend from the lower end of the front frame 19 left-rearwardly and to extend in the front-rear direction X1 from an on-the-way position. In a side view, the left first frame part 21L substantially straight extends rearwardly from the lower end of the front frame 19, and is slightly inclined rearwardly obliquely upwardly.

The right first frame part 21R is shaped so as to extend from the lower end of the front frame 19 right-rearwardly and to extend in the front-rear direction X1 from an on-the-way position. In a side view, the right first frame part 21R substantially straight extends rearwardly from the lower end of the front frame 19, and is slightly inclined rearwardly obliquely upwardly.

A stay member 25L is fixed to the front of the left first frame part 21L. A stay member 26L is fixed to the rear of the left first frame part 21L. A stay member 25R is fixed to the front of the right first frame part 21R. A stay member 26 is fixed to the rear of the right first frame part 21R.

The second frame part 22 is disposed so as to extend from the first frame part 21 rearwardly obliquely upwardly. The second frame part 22 consists of a left second frame part 22L and a right second frame part 22R. The left second frame part 22L and the right second frame part 22R are disposed apart from each other in the right-left direction Y1 of the vehicle. In this embodiment, the left second frame part 22L and the right second frame part 22R are shaped laterally symmetrically.

The left second frame part 22L has the shape of the capital letter S in a side view. The left second frame part 22L consists of a lower end 22aL, a middle 22bL, and an upper end 22cL. The lower end 22aL has a curved shape, and extends rearwardly from the left first frame part 21L. The middle 22bL extends straight from the lower end 22aL rearwardly obliquely upwardly. In a side view, the inclination angle of the middle 22bL with respect to the left first frame part 21L is, for example, about 45 degrees. The upper end 22cL has a curved shape, and extends rearwardly from the middle 22bL. The rear end of the upper end 22cL is directed substantially horizontally.

The right second frame part 22R has the shape of the capital letter S in a side view. The right second frame part 22R consists of a lower end 22aR, a middle 22bR, and an upper end 22cR. The lower end 22aR has a curved shape, and extends rearwardly from the right first frame part 21R. The middle 22bR extends straight from the lower end 22aR rearwardly obliquely upwardly. In a side view, the inclination angle of the middle 22bR with respect to the right first frame part 21R is, for example, about 45 degrees. The upper end 22cR has a curved shape, and extends from the middle 22bR rearwardly. The rear end of the upper end 22cR is directed substantially horizontally.

A stay member 27L is fixed to the upper end 22cL of the left second frame part 22L. The stay member 27L is fixed to a substantially-horizontally-directed part of the upper end 22cL. A stay member 27R is fixed to the upper end 22cR of the right second frame part 22R. The stay member 27R is fixed to a substantially-horizontally-directed part of the upper end 22cR.

The third frame part 23 consists of a left third frame part 23L and a right third frame part 23R. The left third frame part 23L and the light third frame part 23R are disposed apart from each other in the right-left direction Y1. In this embodiment, the left third frame part 23L and the right third frame part 23R are shaped laterally symmetrically.

The left third frame part 23L extends from the left second frame part 22L rearwardly, and is slightly inclined rearwardly obliquely upwardly in a side view.

The right third frame part 23R extends from the upper end 22cR of the right second frame part 22R rearwardly, and is slightly inclined rearwardly obliquely upwardly in a side view.

A reinforcement member 28 is disposed between the rear end of the left third frame part 23L and the rear end of the right third frame part 23R. The reinforcement member 28 is fixed to the rear end of the left third frame part 23L and to the rear end of the right third frame part 23R by, for example, welding.

The left third frame part 23L and the right third frame part 23R are connected to a rear seat bracket 29. The rear seat bracket 29 is disposed above the left third frame part 23L and the light third frame part 23R.

The fourth frame part 24 is disposed below the second frame part 22 and the third frame part 23. The fourth frame part 24 consists of a left fourth frame part 24L and a right fourth frame part 24R. The left fourth frame part 24L and the right fourth frame part 24R are disposed apart from each other in the right-left direction Y1. In this embodiment, the left fourth frame part 24L and the right fourth frame part 24R are shaped laterally symmetrically.

The left fourth frame part 24L is shaped so as to extend rearwardly obliquely upwardly, be then bent upwardly at an on-the-way position, and extend rearwardly obliquely upwardly. A front end 24aL of the left fourth frame part 24L is fixed to the middle 22bL of the left second frame part 22L by, for example, welding. A rear end 24bL of the left fourth frame part 24L is fixed to the left third frame part 23L by, for example, welding.

The right fourth frame part 24R is shaped so as to extend rearwardly obliquely upwardly, be then bent upwardly at an on-the-way position, and extend rearwardly obliquely upwardly. A front end 24aR of the right fourth frame part 24R is fixed to the middle 22bR of the right second frame part 22R by, for example, welding. A rear end 24bR of the right fourth frame part 24R is fixed to the right third frame part 23R by, for example, welding.

As shown in FIG. 1, the rear wheel 4 is disposed below the third frame part 23 in a side view. The swing unit 71 including the rear wheel 4 is connected to the third frame part 23 with a shock absorber 90 disposed therebetween. This makes it possible to attenuate and absorb a shock caused when the swing unit 71 swings around the first pivot shaft 74 by means of the shock absorber 90.

In a side view, the first frame part 21 is disposed behind the front wheel 3, and is disposed below the upper end 3a of the front wheel 3. The vehicle body cover 7 is attached to the vehicle body frame 2. The vehicle body cover 7 consists of a front cover 31 with which the head tube 8 is covered, a lower cover 32 extending from the lower part of the front cover 31 rearwardly, and a rear cover 33 disposed behind the front cover 31.

The front cover 31 surrounds the head tube 8 and a part of the steering shaft 9, and surrounds the front frame 19. The lower cover 32 extends from the lower part 31a of the front cover 31 rearwardly, and covers the first frame part 21 and the lower end of the second frame part 22 from below and from both the right and left sides. A feet-putting part 34 is disposed at the upper end of the lower cover 32. The feet-putting part 34 is used for a driver to put his/her feet thereon, and has a substantially flat shape. The feet-putting part 34 is slightly inclined rearwardly obliquely upwardly in a side view. The feet-putting part 34 is supported from below by means of the stay members 25 and 26 fixed to the first frame part 21. The feet-putting part 34 is fixed to these stay members 25 and 26 by use of, for example, screw members.

The rear cover 33 is shaped, as a whole, so as to extend from a rear part 32a of the lower cover 32 rearwardly obliquely upwardly. The rear cover 33 covers the area of the second frame part 22 excluding its lower end from the front side and from both the right and left sides. The rear cover 33 covers the third frame part 23 and the fourth frame part 24 from the front side and from both the right and left sides.

The rear cover 33 consists of a front part 33a and a side part 33b extending from the front part 33a rearwardly. The front part 33a of the rear cover 33 is disposed behind the feet-putting part 34, and extends in the up-down direction Z1 of the vehicle. The front part 33a covers the middle 22b and the upper end 22c of the second frame part 22 from the front side.

A seat 37 is disposed above the rear cover 33. A lower end 37d of the seat 37 is disposed adjacent to the rear cover 33. The feet of a driver sitting on the seat 37 are put on the feet-putting part 34 while the two-wheeled electric vehicle 1 is traveling.

The feet-putting part 34 is disposed between the first frame part 21 and the upper end 3a of the front wheel 3 in the up-down direction Z1. The feet-putting part 34 is disposed between the rear end 3b of the front wheel 3 and the front end 37a of the seat 37 in the front-rear direction X1. Additionally, the feet-putting part 34 is disposed between a rear surface 31b of the front cover 31 and the front end 37a of the seat 37 in the front-rear direction X1. An upper end 34b of the feet-putting part 34 can be mentioned as the rear end of the feet-putting part 34.

In other words, the feet-putting part 34 is disposed in front of and below the seat 37. The seat 37 is disposed above the second frame part 22, is disposed above a part of the third frame part 23, and is disposed above a part of the fourth frame part 24. The space surrounded by the seat 37 and the rear cover 33 defines a housing space S1.

With reference to FIG. 2, the seat 37 is shaped so as to extend in the front-rear direction X1, and has an upper surface 37b serving as a seating surface. The seat 37 additionally has a seat concave 37c hollowed upwardly from below. A buffer member, such as a sponge, is disposed between the upper surface 37b of the seat 37 and the seat concave 37c, so that it becomes possible to lessen a shock that acts on a driver sitting on the seat 37.

The seat 37 is supported by a first bracket 100 and a rear seat bracket 29 that are aligned in the front-rear direction X1. The first bracket 100 is one example of a "seat bracket" of the present invention. The seat 37 is supported by the second frame part 22 of the vehicle body frame 2 through the first bracket 100, and is supported by the third frame part 23 of the vehicle body frame 2 through the rear seat bracket 29.

The first bracket 100 is detachably attached to the second frame part 22. The first bracket 100 extends from the second frame part 22 upwardly. A hinge part 38 is provided at the upper end of the first bracket 100. The hinge part 38 is disposed in the seat concave 37c. The seat 37 is supported by the first bracket 100 through the hinge part 38. The first bracket 100 supports the seat 37 from below. The seat 37 can be rotated around the hinge part 38. The housing space S1 can be opened upwardly by rotating the seat 37 around the hinge part 38. The seat 37 may be fixed directly to the first bracket 100 by removing the hinge part 38. The rear 37e of the seat 37 is supported by the rear seat bracket 29.

A battery 6 serving as a power source of the electric motor 5 is disposed in the housing space S1 below the seat 37.

As shown in FIG. 1, a loading platform 39 is disposed behind the seat 37. The loading platform 39 is disposed on the third frame part 23, and is supported by this third frame part 23. Pieces of freight can be placed on the loading platform 39. The load of the freight placed on the loading platform 39 is received chiefly by the rear wheel 4.

The loading platform 14, the battery 6 that is a heavy component, and the loading platform 39 are aligned in the front-rear direction X1 in this way. Therefore, the balance of the load of the two-wheeled electric vehicle 1 in the front-rear direction X1 can be kept more evenly when pieces of freight are placed on the loading platform 14 and the loading platform 39. Therefore, the high operability of the two-wheeled electric vehicle 1 can be maintained even when pieces of freight are placed on the loading platform 14 and the loading platform 39.

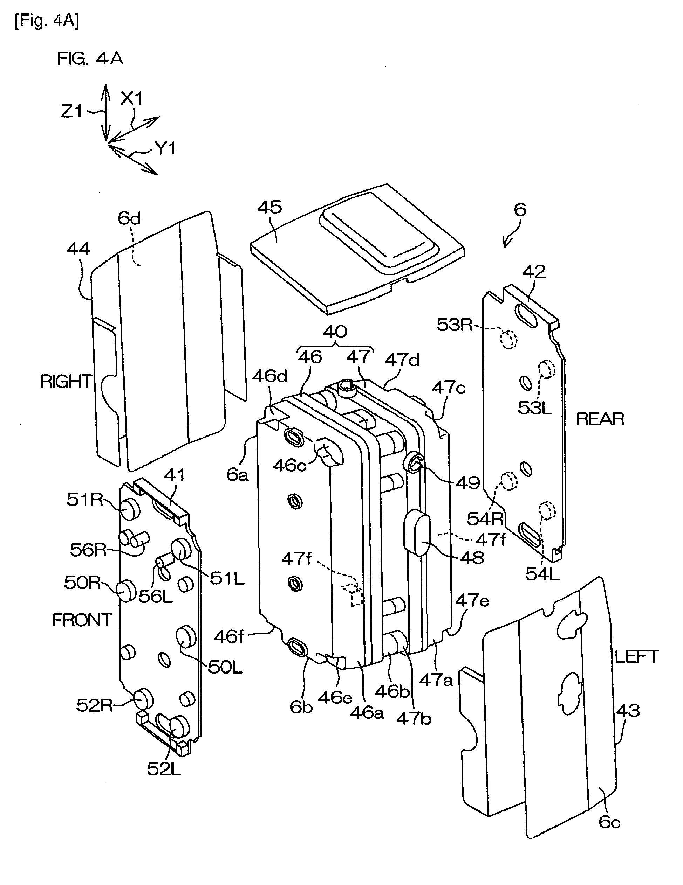

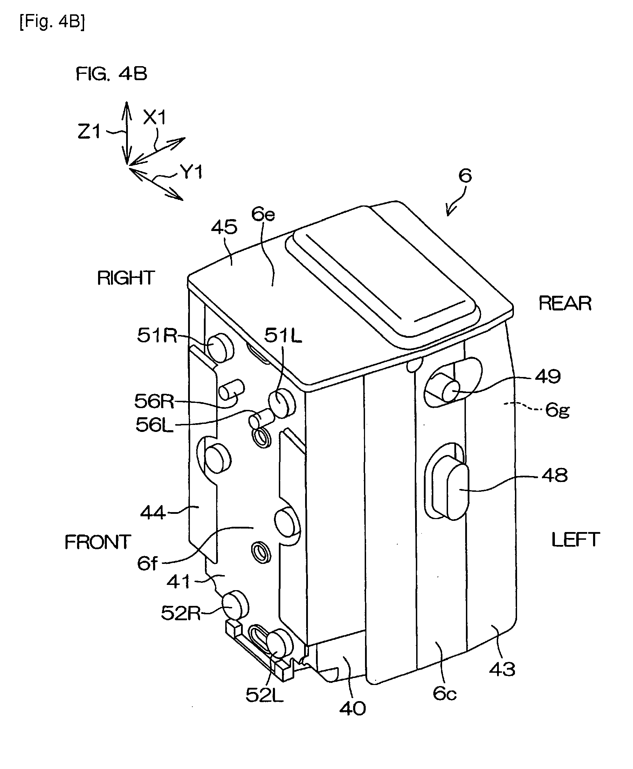

FIG. 4A is an exploded perspective view of the battery 6 viewed from frontally above. FIG. 4B is a perspective view of the battery 6 viewed from frontally above. As shown in FIG. 4A, the battery 6 includes a battery main body 40, a front heat sink 41, a rear heat sink 42, a left cover 43, a right cover 44, and an upper cover 45.

The battery main body 40 consists of a first module 46 and a second module 47. Each of the modules 46 and 47 is structured to contain many chargeable secondary batteries. The first module 46 includes a first case 46a and a plurality of first connection pieces 46b extending from the first case 46a rearwardly. The first case 46a has the shape of a vertically-long rectangular parallelepiped, and contains many chargeable secondary batteries.

A plurality of first to fourth concaves 46c to 46f that are hollow parts are formed in the front part of the first case 46a. The first to fourth concaves 46c to 46f are hollowed rearwardly. The first concave 46c is disposed at the upper-left end of the first case 46a, and is opened leftwardly and upwardly. The second concave 46d is disposed at the upper-right end of the first case 46a, and is opened rightwardly and upwardly. The third concave 46e is disposed at the lower-left end of the first case 46a, and is opened leftwardly and downwardly. The fourth concave 46f is disposed at the lower-right end of the first case 46a, and is opened rightwardly and downwardly.

The second module 47 is disposed behind the first case 46a, and is fixed to the first case 46. The second module 47 is shaped so as to be symmetrical to the first module 46 in the thickness direction of the battery main body 40.

The second module 47 includes a second case 47a and a plurality of second connection pieces 47b extending from the second case 47a forwardly. The second case 47a has the shape of a vertically-long rectangular parallelepiped, and contains many chargeable secondary batteries. Each of the second connection pieces 47b is confronted with a corresponding one of the first connection pieces 46b.

A plurality of fifth to eighth concaves 47c to 47f that are hollow parts are formed in the rear part of the second case 47a. The fifth to eighth concaves 47c to 47f are hollowed forwardly. The fifth concave 47c is disposed at the upper-left end of the second case 47a, and is opened leftwardly and upwardly. The sixth concave 47d is disposed at the upper-right end of the second case 47a, and is opened rightwardly and upwardly. The seventh concave 47e is disposed at the lower-left end of the second case 47a, and is opened leftwardly and downwardly. The eighth concave 47f is disposed at the lower-right end of the second case 47a, and is opened rightwardly and downwardly. The fifth to eighth concaves 47c to 47f are aligned with the first to fourth concaves 46c to 46f, respectively, in the thickness direction of the battery 6.

A service plug 48 is fixed to the left side surface of the second module 47. The service plug 48 includes a fuse. The supply of an electric current to each secondary battery disposed in the battery main body 40 is cut off by detaching the fuse. This fuse is detached from the battery main body 40, for example, when the battery 6 is attached to or detached from the vehicle body frame 2.

A connection terminal 49 is fixed to the left side surface of the second module 47. The connection terminal 49 is used to electrically connect each secondary battery disposed in the battery main body 40 to external devices outside the battery 6.

The front heat sink 41 is a plate-like member made of a material, such as an aluminum alloy, that has excellent thermal conductivity. The front heat sink 41 is fixed to the front surface of the first case 46a. A plurality of support projections 50L, 50R, 51L, 51R, 52L, and 52R are formed on the front surface of the front heat sink 41. The first support projections 50L and 50R are disposed at the middle part in the up-down direction of the front heat sink 41, and are arranged laterally apart from each other. Upper second support projections 51L and 51R are disposed at the upper part of the front heat sink 41 (i.e., the upper part 6a of the battery 6), and are arranged laterally apart from each other. Lower second support projections 52L and 52R are disposed at the lower part of the front heat sink 41 (i.e., the lower part 6b of the battery 6), and are arranged laterally apart from each other.

Projecting stoppers 56L and 56R are formed near the upper second support projections 51L and 51R.

The rear heat sink 42 is a plate-like member made of the same material as the front heat sink 41. The rear heat sink 42 is shaped so as to be substantially symmetrical to the front heat sink 41 in the thickness direction of the battery 6. The rear heat sink 42 is fixed to the rear surface of the second case 47a. A plurality of support projections 53L, 53R, 54L, and 54R are formed on the rear surface of the rear heat sink 42. The third support projections 53L and 53R are disposed at the upper part of the rear heat sink 42 (i.e., the upper part 6a of the battery 6), and are arranged apart from each other in the right-left direction Y1. The fourth support projections 54L and 54R are disposed at the lower part of the rear heat sink 42 (i.e., the lower part 6b of the battery 6), and are arranged apart from each other in the right-left direction Y1.

The left cover 43, the right cover 44, and the upper cover 45 are made of the same material as the front heat sink 41, and are smaller in thickness than the front heat sink 41.

As shown in FIG. 4A and FIG. 4B, the left cover 43 is fixed to the battery main body 40, and forms a left side surface 6c of the battery 6. The left cover 43 has a through-hole through which the service plug 48 and the connection terminal 49 are inserted. The front end and the rear end of the left cover 43 are bent and brought into contact with the front surface of the front heat sink 41 and the rear surface of the rear heat sink 42, respectively.

The right cover 44 is fixed to the battery main body 40, and forms a right side surface 6d of the battery 6. The front end and the rear end of the right cover 44 are bent and brought into contact with the front surface of the front heat sink 41 and the rear surface of the rear heat sink 42, respectively. The upper cover 45 is fixed to the battery main body 40, and forms an upper surface 6e of the battery 6. As a result of this structure, the battery 6 has the shape of a rectangular parallelepiped as a whole.

A front surface 6f of the battery 6 is formed by the battery main body 40, the front heat sink 41, the front end of the left cover 43, and the front end of the right cover 44. A rear surface 6g of the battery 6 is formed by the battery main body 40, the rear heat sink 42, the rear end of the left cover 43, and the rear end of the right cover 44.

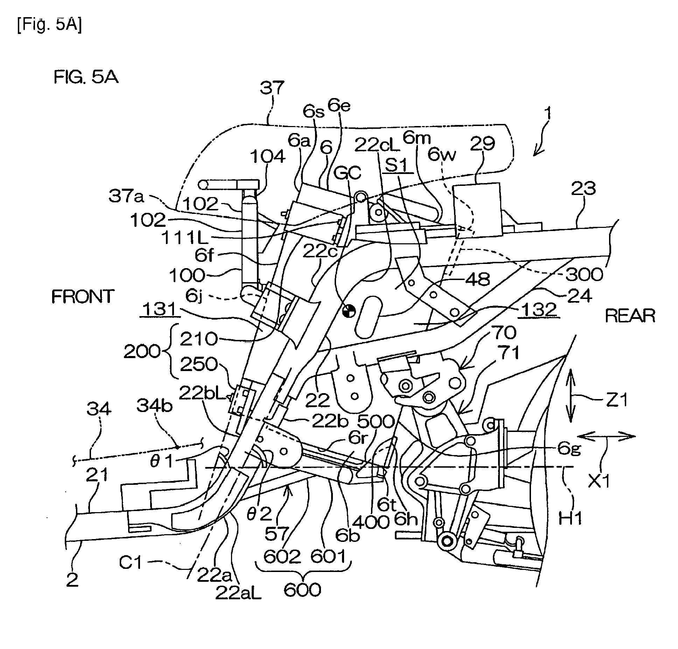

FIG. 5A is an enlarged view showing surroundings of the battery 6 of FIG. 2. A state of the two-wheeled electric vehicle 1 viewed sidewardly is described when reference is made to FIG. 5A. The battery 6 is disposed between the second frame parts 22 in the housing space S1 below the seat 37. The battery 6 is postured to be inclined rearwardly obliquely upwardly. In other words, the battery 6 is postured to be inclined so that the upper part 6a of the battery 6 is located at a more rearward position than the lower part 6b of the battery 6.

As a result, in a side view, the forward edge of the battery 6, i.e., the front surface 6f of the battery 6 becomes higher in position in proportion to a rearward progression. In other words, in a side view, the front surface 6f (i.e., forward edge) of the battery 6 becomes lower in position in proportion to a forward progression.

Likewise, in a side view, the rearward edge of the battery 6, i.e., the rear surface 6g of the battery 6 becomes higher in position in proportion to a rearward progression. In other words, in a side view, the rear surface 6g (i.e., rearward edge) of the battery 6 becomes lower in position in proportion to a forward progression.

Additionally, in a side view, the upward edge of the battery 6, i.e., the upper surface 6e of the battery 6 becomes lower in position in proportion to a rearward progression. In other words, in a side view, the upper surface 6e (i.e., upward edge) of the battery 6 becomes higher in position in proportion to a forward progression.

Likewise, in a side view, the downward edge of the battery 6, i.e., the lower surface 6r of the battery 6 becomes lower in position in proportion to a rearward progression. In other words, in a side view, the lower surface 6r (i.e., downward edge) of the battery 6 becomes higher in position in proportion to a forward progression.

The upper part 6a of the battery 6 is disposed between the first bracket 100 and the rear seat bracket 29. The battery 6 has a substantially rectangular shape in a side view. The substantially rectangular shape of the battery 6 is longer in length in the up-down direction Z1 than in the front-rear direction X1.

A first horizontal plane H1 that passes through the lower end 6t of the battery 6 is assumed in a side view. The inclination angle theta 1 of the battery 6 with respect to the first horizontal plane H1 is greater than the inclination angle theta 2 of the second frame part 22 with respect to the first horizontal plane H1.

In this embodiment, the inclination angle theta 1 of the battery 6 is defined as an acute angle between the first horizontal plane H1 and a plane parallel to the front surface 6f of the battery 6. The inclination angle theta 2 of the second frame part 22 is defined as an acute angle between a central axis line C1 of the middle 22b of the second frame part 22 and the first horizontal plane H1 in a side view.

The battery 6 includes a front region 131 disposed in front of the second frame part 22 and a rear region 132 disposed behind the second frame part 22. In a side view, the area of the rear region 132 is greater than that of the front region 131.

In a side view, the second frame part 22 extends from the first frame part 21, then passes the front of the lower part 6b of the battery 6, then extends rearwardly obliquely upwardly, then curves rearwardly near the gravity center GC of the battery 6, and passes the upper part 6a of the battery 6. As a result, in a side view, the front region 131 is defined by the front and upper surfaces 6f and 6e of the battery 6 and the second frame part 22. Additionally, in a side view, the rear region 132 is defined by the rear and lower surfaces 6g and 6r of the battery 6 and the second frame part 22.

In a side view, the battery 6 is aligned with the second frame part 22 in the right-left direction Y1. The battery 6 is located between the second frame parts 22. Additionally, the battery 6 is aligned with a part of the third frame part 23 and a part of the fourth frame part 24 in the right-left direction Y1. In a side view, the service plug 48 of the battery 6 is disposed in a region surrounded by the second frame part 22, the third frame part 23, and the fourth frame part 24. In a side view, the gravity center GC of the battery 6 is located near the service plug 48.

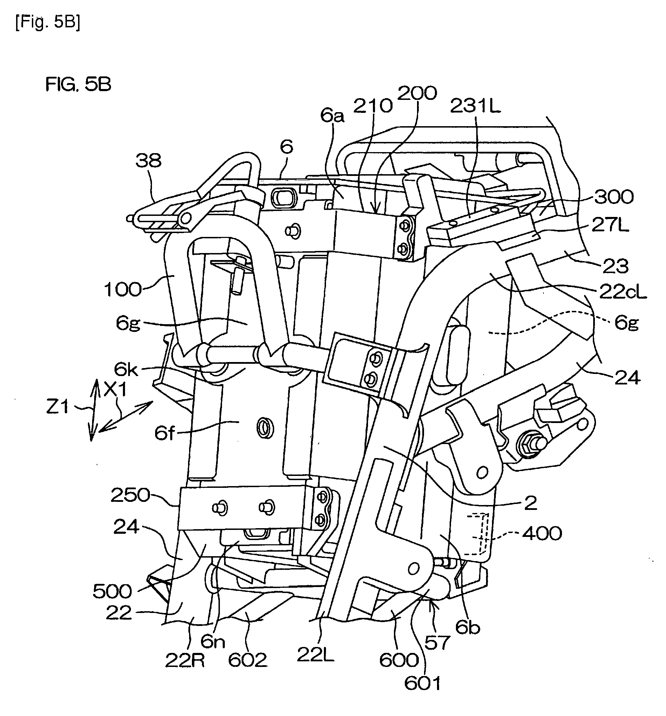

FIG. 5B is a perspective view of a main part around the battery 6 viewed from frontally below. The battery 6 is supported by the vehicle body frame 2 with a battery supporting device 57 therebetween.

The battery supporting device 57 includes a first bracket 100, a second bracket 200, a third bracket 300, a fourth bracket 400, a fifth bracket 500, and a subframe 600. The front surface 6f of the battery 6 is supported by the first bracket 100 and the second bracket 200. The rear surface 6g of the battery 6 is supported by the third bracket 300 and the fourth bracket 400. The lower part 6b of the battery 6 is supported by the fifth bracket 500.

The first bracket 100 is in contact with a central part 6g in the up-down direction Z1 of the front surface 6f of the battery 6. The second bracket 200 includes an upper second bracket 210 and a lower second bracket 250. The upper second bracket 210 extends from the upper end 22c of the second frame part 22 toward the front of the battery 6, and comes into contact with the front surface 6f in the upper part 6a of the battery 6. The lower second bracket 250 extends from the lower end 22a of the second frame part 22 toward the front of the battery 6, and comes into contact with the front surface 6f in the lower part 6b of the battery 6.

The third bracket 300 extends from the third frame part 23 toward the battery 6, and comes into contact with the rear surface 6g in the upper part 6a of the battery 6.

The fourth bracket 400 is in contact with the rear surface 6g in the lower part 6b of the battery 6. The fourth bracket 400 is supported by the subframe 600. The subframe 600 is formed by use of, for example, a metal pipe, and is structured to receive the load of the battery 6.

The subframe 600 consists of a subframe main body 601 and an arm part 602. The subframe main body 601 extends from the second frame part 22 obliquely rearwardly downwardly. The fourth bracket 400 is fixed to the rear end of the subframe main body 601. The arm part 602 extends from the subframe main body 601 forwardly obliquely downwardly, and is fixed to the lower end of the second frame part 22.

The fifth bracket 500 is disposed on the subframe main body 601, and is fixed to the subframe main body 601.

The battery supporting device 57 will be hereinafter described in more detail.

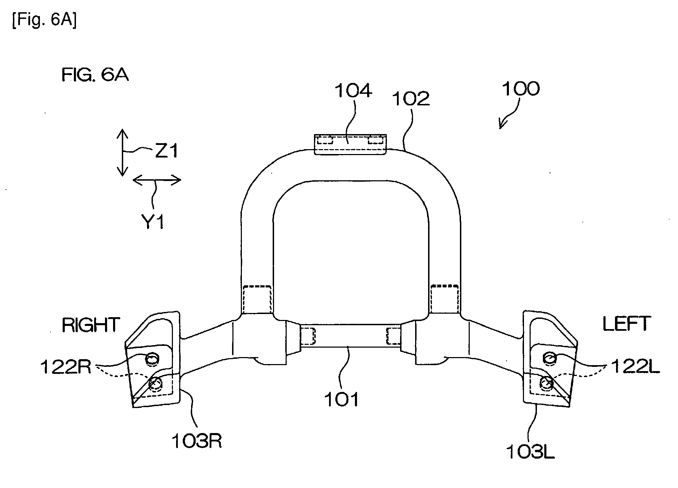

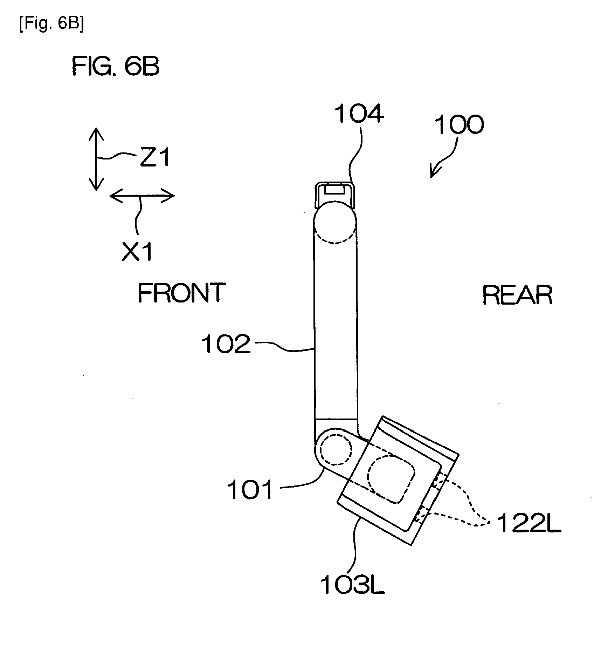

FIG. 6A is a front view of the first bracket 100. FIG. 6B is a left side view of the first bracket 100. As shown in FIG. 6A and FIG. 6B, the first bracket 100 is shaped laterally symmetrically. The first bracket 100 is composed of a first bracket main body 101, a seat supporting part 102 that extends from the first bracket main body 101 upwardly, and first mounting parts 103L and 103R.

The first bracket main body 101 is shaped like a rod that extends in the right-left direction Y1. The middle part of the first bracket main body 101 extends substantially straight in the right-left direction Y1. Each of the left end part and the right end part of the first bracket main body 101 extends rearwardly obliquely downwardly.

The first mounting part 103L is fixed to the left end part of the first bracket main body 101, and is disposed on the left side of this left end part. The first mounting part 103L has left second through-holes 122L. In this embodiment, two left second through-holes 122L are formed apart from each other in the up-down direction Z1.

The first mounting part 103R is fixed to the right end part of the first bracket main body 101, and is disposed on the right side of this right end part. The first mounting part 103R has right second through-holes 122R. In this embodiment, two right second through-holes 122R are formed apart from each other in the up-down direction Z1.

The seat supporting part 102 is fixed to the middle part of the first bracket main body 101. In this embodiment, the seat supporting part 102 is shaped like the capital letter U directed downwardly, and is fixed to the upper end part of the first bracket main body 101. The seat supporting part 102 is disposed above each of the first mounting parts 103L and 103R. A seat receiving part 104 is provided at the upper end of the seat supporting part 102.

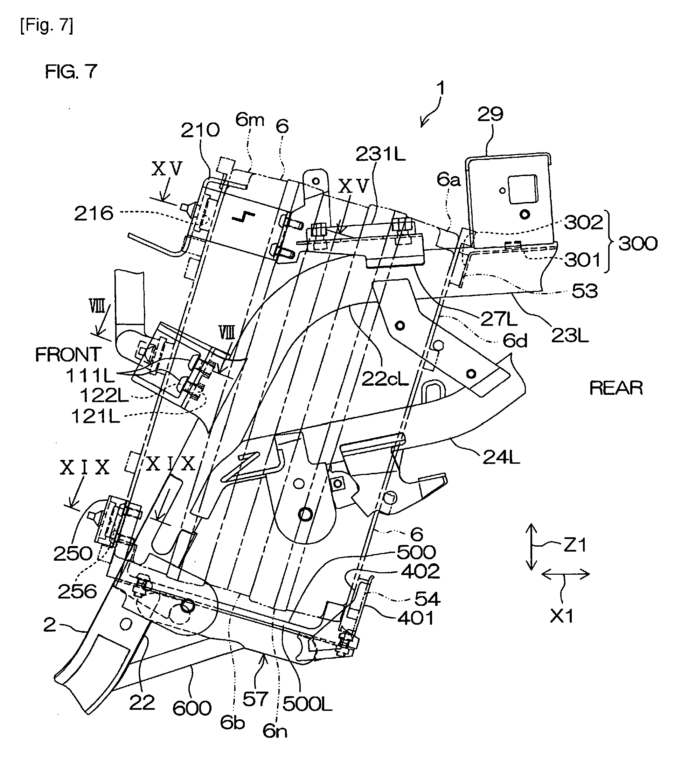

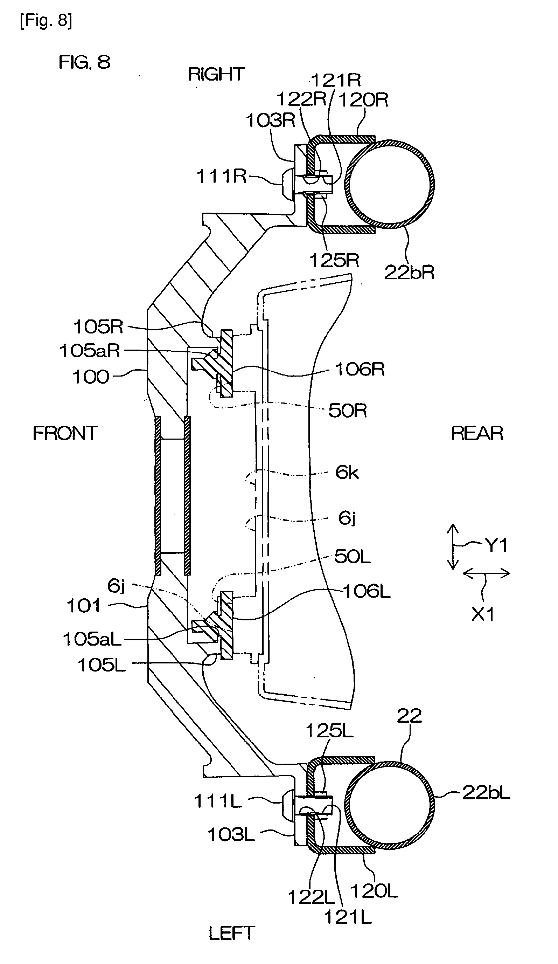

FIG. 7 is a left side view of the main part around the battery 6 of the two-wheeled electric vehicle 1, for describing a relationship among the battery 6, the battery supporting device 57, and the vehicle body frame 2. FIG. 8 is a sectional view of the main part along the line VIII-VIII of FIG. 7, showing a state viewed from above.

As shown in FIG. 8, the first bracket 100 includes holding parts 105L and 105R extending from the first bracket main body 101 rearwardly and first battery supporting parts 106L and 106R held by the holding parts 105L and 105R, respectively. Each of the holding parts 105L and 105R has the shape of the capital letter L in a plan view. The holding parts 105L and 105R and the first bracket main body 101 are made of a metallic material.

The first battery supporting parts 106L and 106R are integrally-molded pieces made of an elastic member such as rubber. The first battery supporting parts 106L and 106R are one example of a "central supporting part" of the present invention.

The first battery supporting part 106L passes through a through-hole 105aL formed in the holding part 105L. The first battery supporting part 106L is shaped like a disk behind the through-hole 105aL, and is brought into elastic contact with the support projection 50L of the battery 6 from before, so that an outer surface 6j of the battery 6 is elastically pressed.

The first battery supporting part 106R passes through a through-hole 105aR formed in the holding part 105R. The first battery supporting part 106R is shaped like a disk behind the through-hole 105aR, and is brought into elastic contact with the support projection 50R of the battery 6 from before, so that the outer surface 6j of the battery 6 is elastically pressed.

As a result, the first battery supporting parts 106L and 106R of the first bracket 100 support the central part 6k in the up-down direction Z1 of the battery 6 from before.

The first bracket 100 is supported by the second frame part 22. The second frame part 22 includes first seat parts 120L and 120R used to fix the first mounting parts 103L and 103R of the first bracket 100.

The first seat part 120L is fixed to the middle 22bL of the left second frame part 22L, and protrudes from the middle 22bL forwardly. The first seat part 120L has the shape of the capital letter U in a plan view, and additionally has a first nut 125L on the back side of its forward end.

The first through-hole 121L used as a screw hole of the first nut 125L faces the second through-hole 122L of the first mounting part 103L in the front-rear direction X1. In this embodiment, the expression "facing in the front-rear direction X1" denotes "facing in the front-rear direction X1 in a plan view," and is not limited to "being parallel to the front-rear direction X1."

The first seat part 120L receives the first mounting part 103L. The first mounting part 103L is detachably attached to the first seat part 120L by use of a first fixing member 111L. In this embodiment, the first fixing member 111L is a screw member.

The first fixing member 111L passes through the second through-hole 122L and the first through-hole 121L that are aligned in the front-rear direction X1, and is screwed to the first nut 125L.

The first seat part 120R is fixed to the middle 22bR of the right second frame part 22R, and protrudes from the middle 22bR forwardly. The first seat part 120R has the shape of the capital letter U in a plan view, and additionally has a first nut 125R on the back side of its forward end.

The first through-hole 121R used as a screw hole of the first nut 125R faces the second through-hole 122R of the first mounting part 103R in the front-rear direction X1.

The forward end of the first seat part 120R receives the first mounting part 103R.

The first mounting part 103R is detachably attached to the first seat part 120R by use of first fixing members 111R. In this embodiment, the first fixing member 111R is a screw member.

The first fixing member 111R passes through the second through-hole 122R and the first through-hole 121R that are aligned in the front-rear direction X1, and is screwed to the first nut 125R.

In this embodiment, a plurality of first fixing members 111L and 111R (for example, two, respectively) are disposed apart from each other in the up-down direction Z1.

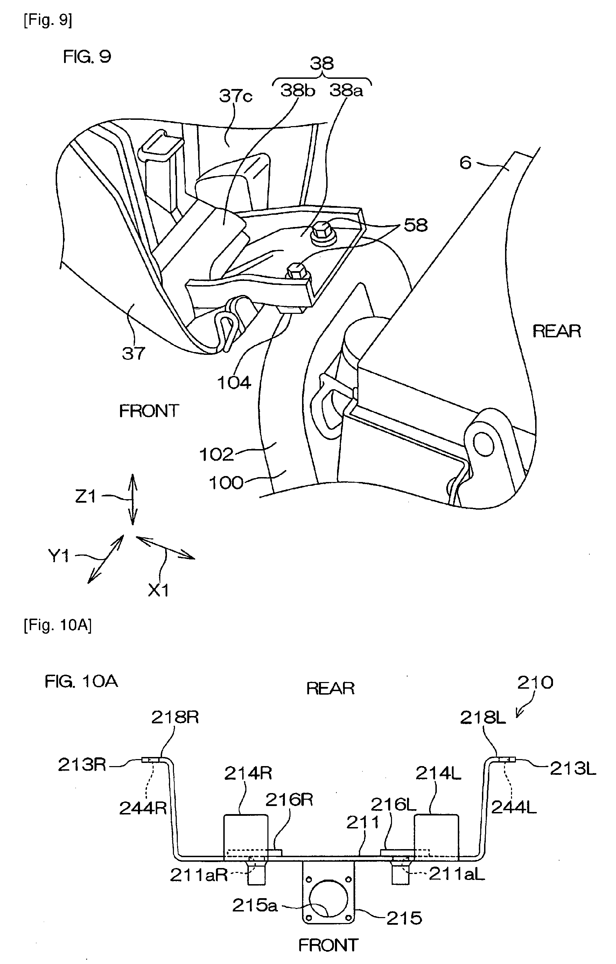

FIG. 9 is a perspective view showing a connection state between the seat supporting part 102 and the seat 37, and the seat supporting part 102 is viewed from left behind.

The seat receiving part 104 at the upper end of the seat supporting part 102 receives the hinge part 38. The hinge part 38 consists of a first part 38a fixed to the seat receiving part 104 of the seat supporting part 102 and a second part 38b fixed to the seat 37 in the seat concave 37c. The rear end of the first part 38a is fixed to the seat receiving part 104 by use of screw members 58 and 58. The seat 37 is received from below by the seat receiving part 104 through the hinge part 38. The weight of a driver sitting on the seat 37 is received by the seat receiving part 104 through the hinge part 38.

As shown in FIG. 2, the front part of an upper end 6m of the battery 6 is disposed at the seat concave 37c. In other words, the upper end 6m of the battery 6 is disposed above the lower end 37d of the seat 37 and below the upper surface 37b of the seat 37.

In a side view, the seat receiving part 104 is disposed in front of the upper end 6m of the battery 6. The seat receiving part 104 is aligned with the rear seat bracket 29 in the front-rear direction X1.

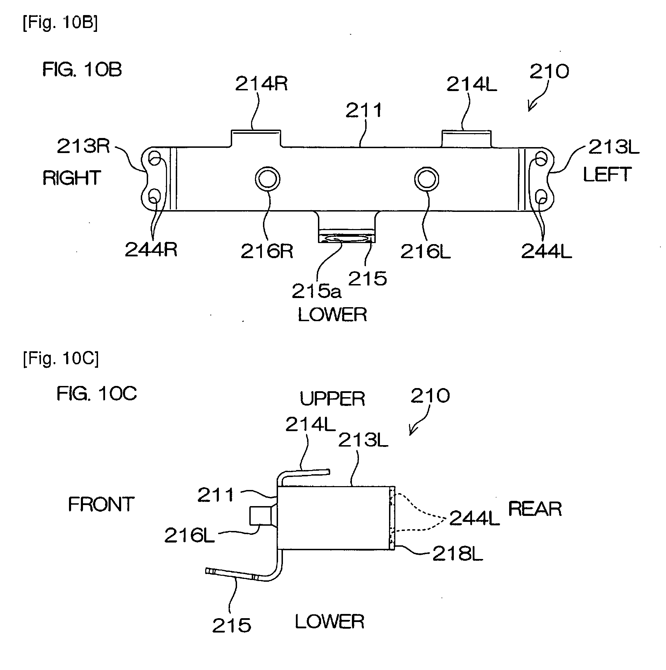

FIG. 10A is a plan view of the upper second bracket 210, FIG. 10B is a front view of the upper second bracket 210, and FIG. 10C is a left side view of the upper second bracket 210.

The upper second bracket 210 includes a plate-like upper second bracket main body 211 extending in the right-left direction Y1, upper second mounting parts 213L and 213R, upper pressing parts 214L and 214R, a holder 215, and upper second battery supporting parts 216L and 216R. The upper second bracket main body 211, the upper second mounting parts 213L and 213R, the upper pressing parts 214L and 214R, and the holder 215 are integrally molded by use of a metallic plate.

The upper second mounting part 213L extends from the left end of the upper second bracket main body 211 rearwardly. An on-the-way part of the upper second mounting part 213L is bent, and a rear end 218L of the upper second mounting part 213L extends in parallel with the upper second bracket main body 211. Upper fourth through-holes 244L are formed in the rear end 218L of the upper second mounting part 213L. In this embodiment, a plurality of upper fourth through-holes 244L (for example, two) are formed apart from each other in the up-down direction Z1.

The upper second mounting part 213R extends from the right end of the upper second bracket main body 211 rearwardly. An on-the-way part of the upper second mounting part 213R is bent, and the rear end 218R of the upper second mounting part 213R extends in parallel with the upper second bracket main body 211. Upper fourth through-holes 244R are formed in the rear end 218R of the upper second mounting part 213R. In this embodiment, a plurality of upper fourth through-holes 244R (for example, two) are formed apart from each other in the up-down direction Z1.

Each of the upper pressing parts 214L and 214R has the shape of the capital letter L, and extends from the upper end of the upper second bracket main body 211 rearwardly.

The holder 215 has the shape of the capital letter L, and extends from the lower end of the upper second bracket main body 211 forwardly. The holder 215 is an annular plate. A holding hole 215a is formed in the holder 215.

The upper second battery supporting parts 216L and 216R are integrally-molded pieces made of an elastic member such as rubber. The upper second battery supporting part 216L passes through a through-hole 211aL formed in the upper second bracket main body 211. The upper second battery supporting part 216L is shaped like a disk behind the through-hole 211aL. The upper second battery supporting part 216R passes through a through-hole 211aR formed in the upper second bracket main body 211. The upper second battery supporting part 216R is shaped like a disk behind the through-hole 211aR. The upper second battery supporting parts 216L and 216R are disposed apart from each other in the right-left direction Y1.

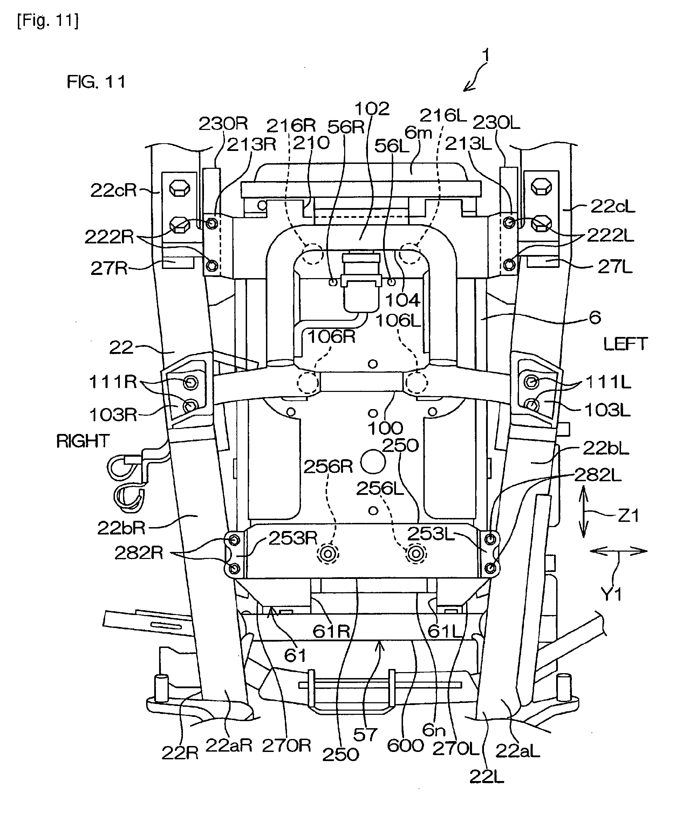

FIG. 11 is a perspective view of the main part of the two-wheeled electric vehicle 1 viewed from before. The upper second bracket 210 is disposed above the first mounting parts 103L and 103R. The upper second bracket 210 is detachably supported by the second frame part 22 through upper second seat parts 230L and 230R.

The upper second seat part 230L is fixed to the upper surface of the upper end 22cL of the left second frame part 22L.

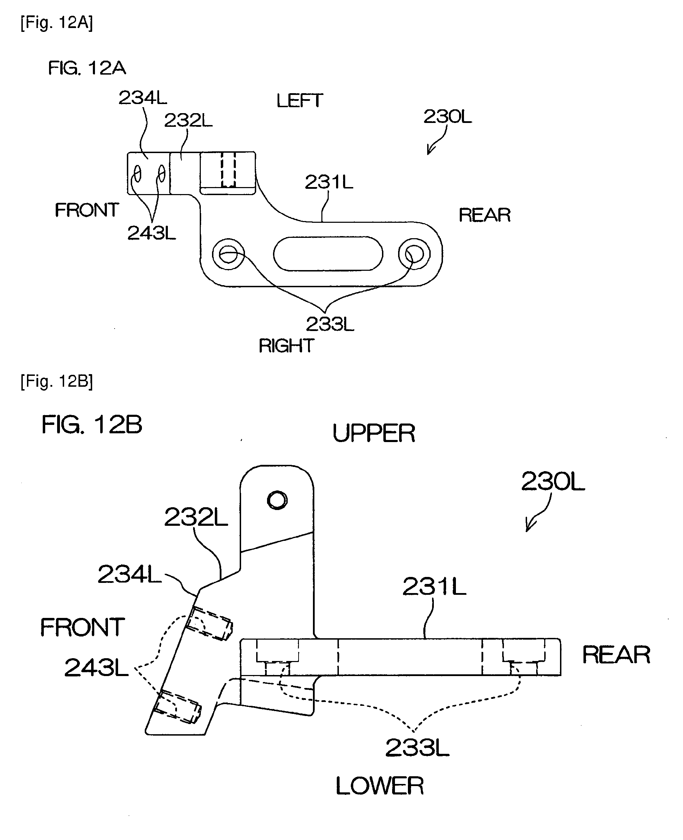

FIG. 12A is a plan view of the upper second seat part 230L, and FIG. 12B is a left side view of the upper second seat part 230L. The upper second seat part 230L includes an upper second seat part main body 231L and a projection 232L protruding from the upper second seat part 230L right forwardly. The upper second seat part main body 231L is shaped like a plate slender in the front-rear direction X1. Through-holes 233L extending in the up-down direction Z1 are formed in the upper second seat part main body 231L. In this embodiment, a plurality of through-holes 233L (for example, two) are formed apart from each other in the front-rear direction X1.

A forward end surface 234L of the projection 232L is formed in a plane that extends rearwardly obliquely upwardly. Upper third through-holes 243L are formed in the forward end surface 234L of the projection 232L. The upper third through-hole 243L is a screw hole. In this embodiment, a plurality of upper third through-holes 243L (for example, two) are formed apart from each other in the up-down direction Z1.

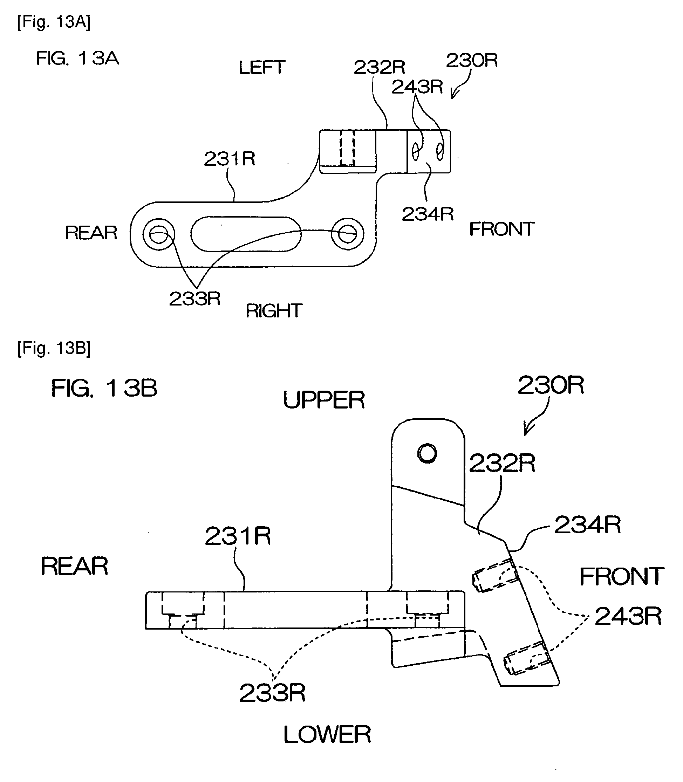

FIG. 13A is a plan view of the upper second seat part 230R, and FIG. 13B is a right side view of the upper second seat part 230R. The upper second seat part 230R includes an upper second seat part main body 231R and a projection 232R protruding from the upper second seat part 230R left forwardly. The upper second seat part main body 231R is shaped like a plate slender in the front-rear direction X1. Through-holes 233R extending in the up-down direction Z1 are formed in the upper second seat part main body 231R. In this embodiment, a plurality of through-holes 233R (for example, two) are formed apart from each other in the front-rear direction X1.

A forward end surface 234R of the projection 232R is formed in a plane that extends rearwardly obliquely upwardly. Upper third through-holes 243R are formed in the forward end surface 234R of the projection 232R. The upper third through-hole 243R is a screw hole. In this embodiment, a plurality of upper third through-holes 243R (for example, two) are formed apart from each other in the up-down direction Z1.

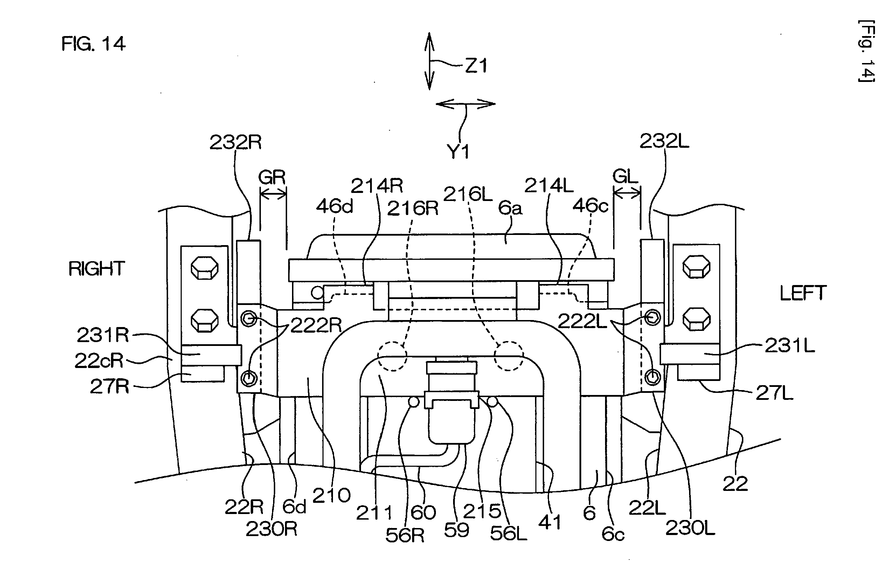

FIG. 14 is an enlarged view of a part of FIG. 11, showing surroundings of the upper part 6a of the battery 6. The upper second seat part main body 231L is disposed above the stay member 27L. The upper second seat part main body 231L is fixed to the stay member 27L by use of, for example, a screw member, and is fixed to the left second frame part 22L through the stay member 27L.

Likewise, the upper second seat part main body 231R is disposed above the stay member 27R. The upper second seat part main body 231R is fixed to the stay member 27R by use of, for example, a screw member, and is fixed to the right second frame part 22R through the stay member 27R.

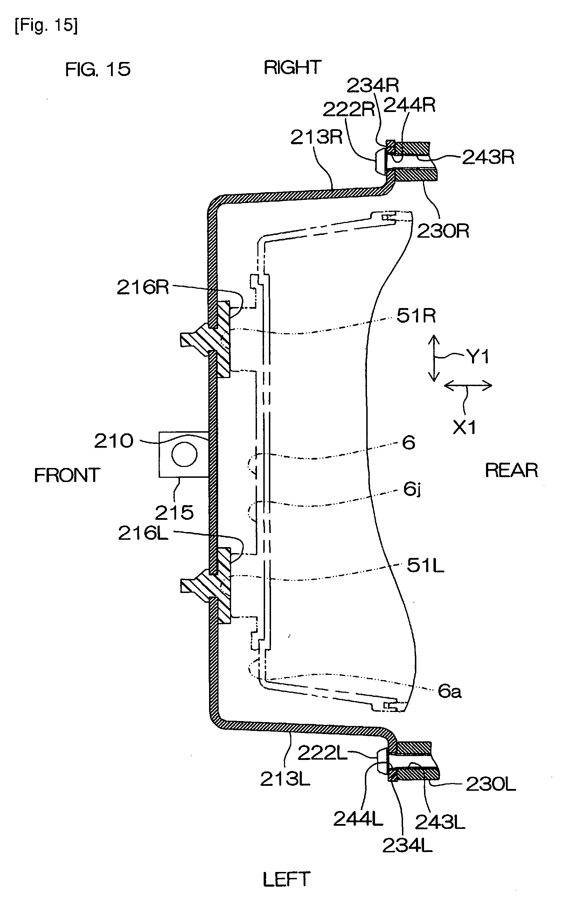

FIG. 15 is a sectional view along the line XV-XV of FIG. 7, and shows the upper second bracket 210 and the upper second seat parts 230L and 230R viewed from above.

The upper second battery supporting parts 216L and 216R are in elastic contact, from before, with corresponding support projections 51L and 51R, respectively, of the battery 6. Accordingly, the upper second battery supporting parts 216L and 216R support the upper part 6a (outer surface 6j) of the battery 6 elastically from before.

The upper second mounting part 213L of the upper second bracket 210 is in contact with the forward end surface 234L of the upper second seat part 230L. The upper fourth through-hole 244L of the upper second mounting part 213L and the upper third through-hole 243L of the upper second seat part 230L face each other in the front-rear direction X1.

The upper second mounting part 213L is detachably attached to the upper second seat part 230L by use of a second fixing member 222L. In this embodiment, the second fixing member 222L is a screw member.

The second fixing member 222L passes through the upper fourth through-hole 244L and the upper third through-hole 243L that coaxially face each other in the front-rear direction X1, and is screwed to the upper third through-hole 243L.

The upper second mounting part 213R of the upper second bracket 210 is in contact with the forward end surface 234R of the upper second seat part 230R. The upper fourth through-hole 244R of the upper second mounting part 213R and the upper third through-hole 243R of the upper second seat part 230R face each other in the front-rear direction X1.

The upper second mounting part 213R is detachably attached to the second seat part 230R by use of second fixing members 222R. In this embodiment, the second fixing member 222R is a screw member.

The second fixing member 222R passes through the upper fourth through-hole 244R and the upper third through-hole 243R that coaxially face each other in the front-rear direction X1, and is screwed to the upper third through-hole 243R.

As shown in FIG. 14, in this embodiment, a plurality of second fixing members 222L and 222R (for example, two, respectively) are disposed apart from each other in the up-down direction Z1.

The pressing parts 214L and 214R of the upper second bracket 210 are aligned with the upper part 6a of the battery 6 in the front-rear direction X1, and press the first concaves 46c and 46d, respectively, from above. The stoppers 56L and 56R formed at the front heat sink 41 of the battery 6 are pressed from above by the lower end of the upper second bracket main body 211.

The upper second bracket 210, the stoppers 56L and 56R, and the pressing parts 214L and 214R make it possible to restrain the battery 6 from being displaced upwardly in the up-down direction Z1 when a great force that vibrates the battery 6 in the up-down direction Z1 acts on the second frame part 22.

The projection 232L of the upper second seat part 230L is disposed with a gap GL between the left side surface 6c of the battery 6 and the projection 232L. Likewise, the projection 232R of the upper second seat part 230R is disposed with a gap GR between the right side surface 6d of the battery 6 and the projection 232R.

As a result of this structure, the projections 232L and 232R of the second seat parts 230L and 230R make it possible to restrain the battery 6 from being displaced in the right-left direction when a great force that vibrates the battery 6 in the right-left direction Y1 acts on the second frame part 22. Therefore, the battery 6 can be reliably restrained from being excessively displaced in the right-left direction Y1.

The holder 215 of the upper second bracket 210 holds a connection terminal 59. In this embodiment, the connection terminal 59 is a connector used to charge the battery 6. A wire 60 extending from the connection terminal 59 extends toward the right second frame part 22R.

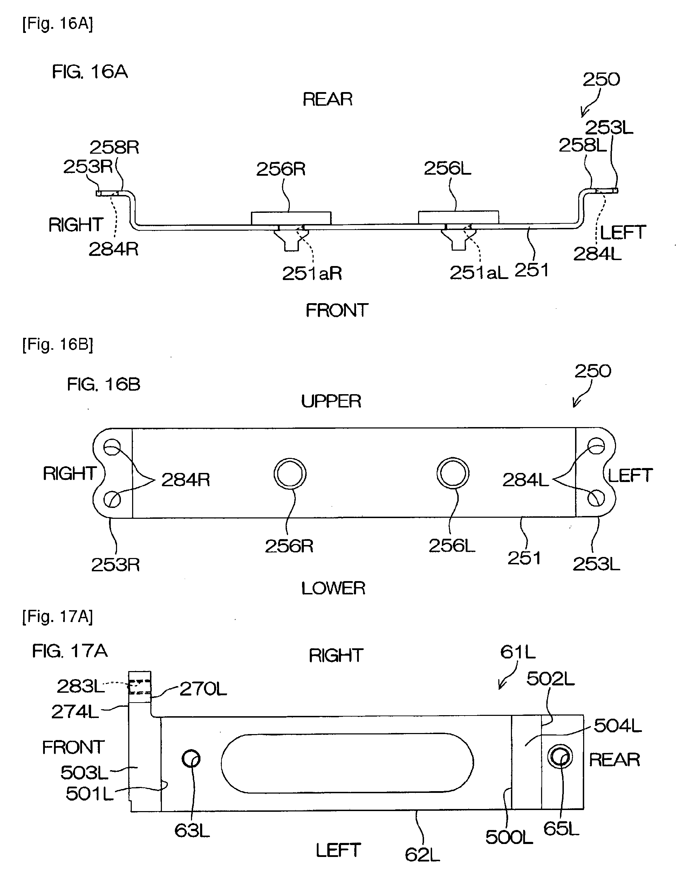

FIG. 16A is a plan view of the lower second bracket 250, and FIG. 16B is a front view of the lower second bracket 250. The lower second bracket 250 includes a plate-like lower second bracket main body 251 extending in the right-left direction Y1, lower second mounting parts 253L and 253R, and lower second battery supporting parts 256L and 256R. The lower second bracket main body 251, the lower second mounting part 253L, and the lower second mounting part 253R are integrally molded by use of a metallic plate.

The lower second mounting part 253L extends from the left end of the lower second bracket main body 251 rearwardly. An on-the-way part of the lower second mounting part 253L is bent, and the rear end 258L of the lower second mounting part 253L extends in parallel with the lower second bracket main body 251. Lower fourth through-holes 284L are formed in the rear end 258L of the lower second mounting part 253L. In this embodiment, a plurality of lower fourth through-holes 284L (for example, two) are formed apart from each other in the up-down direction Z1.

The lower second mounting part 253R extends from the right end of the lower second bracket main body 251 rearwardly. An on-the-way part of the lower second mounting part 253R is bent, and the rear end 258R of the lower second mounting part 253R extends in parallel with the lower second bracket main body 251. Lower fourth through-holes 284R are formed in the rear end 258R of the lower second mounting part 253R. In this embodiment, a plurality of lower fourth through-holes 284R (for example, two) are formed apart from each other in the up-down direction Z1.

The lower second battery supporting parts 256L and 256R are integrally-molded pieces made of an elastic member such as rubber. The lower second battery supporting part 256L passes through the through-hole 251aL formed in the lower second bracket main body 251. The lower second battery supporting part 256L is shaped like a disk behind the through-hole 251aL. The lower second battery supporting part 256R passes through the through-hole 251 aR formed in the lower second bracket main body 251. The lower second battery supporting part 256R is shaped like a disk behind the through-hole 251aR. The lower second battery supporting parts 256L and 256R are disposed apart from each other in the right-left direction Y1.

As shown in FIG. 11, the lower second bracket 250 is disposed below the first mounting parts 103L and 103R. The lower second bracket 250 is detachably supported by the second frame part 22 through the lower second seat parts 270L and 270R and the subframe 600. The lower second seat parts 270L and 270R are disposed at the left supporting unit 61L and the right supporting unit 61R, respectively. The supporting unit 61 is formed by the left supporting unit 61L and the right supporting unit 61R.

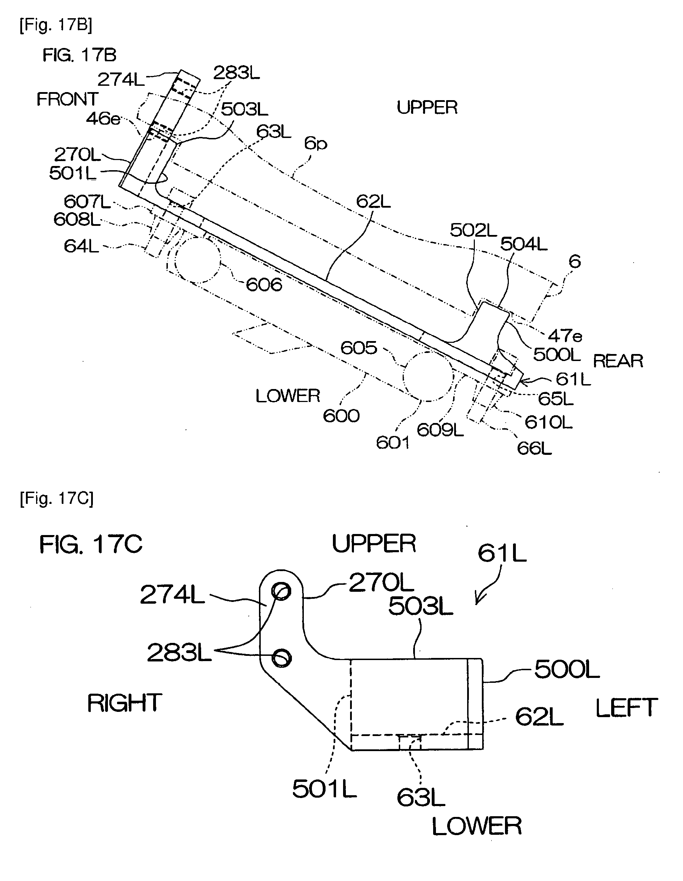

FIG. 17A is a plan view of the left supporting unit 61L, FIG. 17B is a left side view of the left supporting unit 61L, and FIG. 17C is a front view of the left supporting unit 61L.

The left supporting unit 61L is a metallic integrally-molded piece made of, for example, an aluminum alloy. The left supporting unit 61L includes a unit main body 62L, the lower second seat part 270L, and a left fifth bracket 500L.

The unit main body 62L is shaped like a plate that slenderly extends in the front-rear direction X1. The lower second seat part 270L extends from the front end of the unit main body 62L right upwardly. The forward end surface 274L of the lower second seat part 270L is a flat surface that is directed forwardly. Lower third through-holes 283L are formed in the forward end surface 274L. The lower third through-hole 283L extends in the front-rear direction X1. In this embodiment, a plurality of lower third through-holes 283L (for example, two) are disposed apart from each other in the up-down direction Z1.

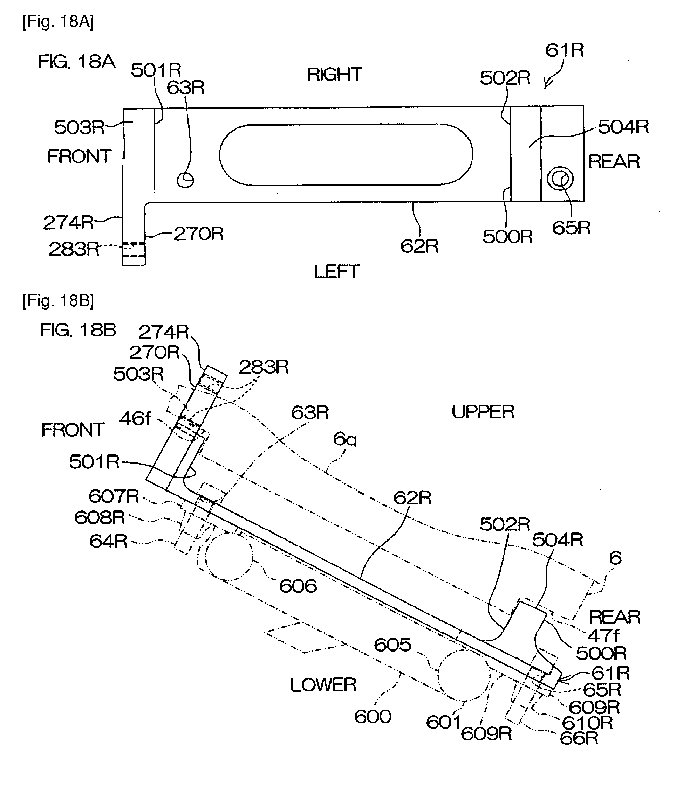

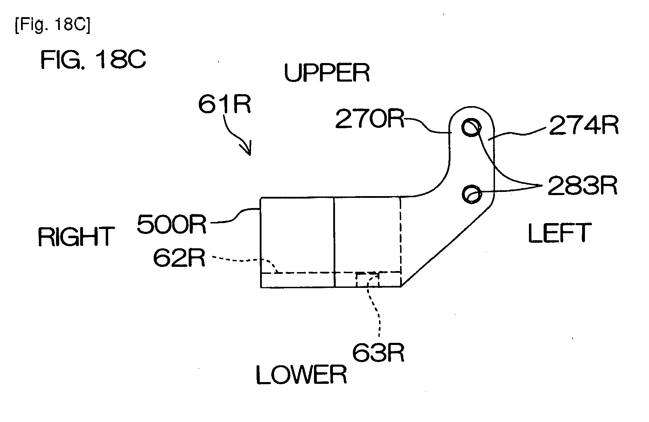

FIG. 18A is a plan view of the right supporting unit 61R, FIG. 18B is a left side view of the right supporting unit 61R, and FIG. 18C is a front view of the right supporting unit 61R.

The right supporting unit 61R is a metallic integrally-molded piece made of, for example, an aluminum alloy. The right supporting unit 61R includes a unit main body 62R, the lower second seat part 270R, and a right fifth bracket 500R.

The unit main body 62R is shaped like a plate that slenderly extends in the front-rear direction X1. The lower second seat part 270R extends from the front end of the unit main body 62R left upwardly. The forward end surface 274R of the lower second seat part 270R is a flat surface that is directed forwardly. Lower third through-holes 283R are formed in the forward end surface 274R. The lower third through-hole 283R extends in the front-rear direction X1. In this embodiment, a plurality of lower third through-holes 283R (for example, two) are disposed apart from each other in the up-down direction Z1.

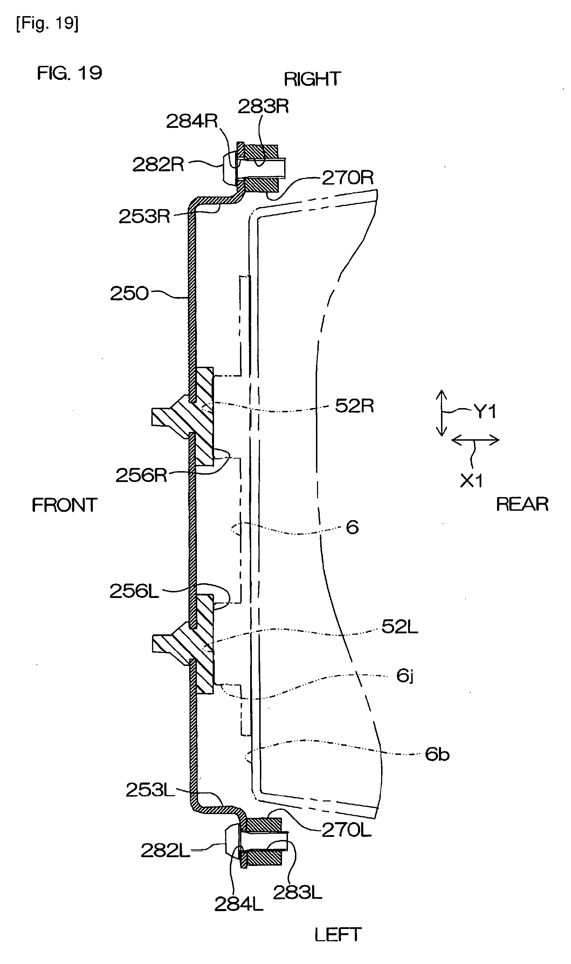

FIG. 19 is a sectional view of the main part along the line XIX-XIX of FIG. 7, and shows the lower second bracket 250 and the lower second seat parts 270L and 270R viewed from above.

The lower second battery supporting parts 256L and 256R are in elastic contact, from before, with corresponding support projections 52L and 52R, respectively, of the battery 6. Accordingly, the lower second battery supporting parts 256L and 256R support the lower part 6b (outer surface 6j) of the battery 6 elastically from before.

The lower second mounting part 253L of the lower second bracket 250 is received by the lower second seat part 270L. The lower fourth through-hole 284L of the lower second mounting part 253L and the third through-hole 283L of the lower second seat part 270L face each other in the front-rear direction X1.

The lower second mounting part 253L is detachably attached to the lower second seat part 270L by use of a lower second fixing member 282L. In this embodiment, the lower second fixing member 282L is a screw member.

The lower second fixing member 282L passes through the lower fourth through-hole 284L and the lower third through-hole 283L that coaxially face each other in the front-rear direction X1, and is screwed to the third through-hole 283L.

The lower second mounting part 253R of the lower second bracket 250 is received by the lower second seat part 270R. The lower fourth through-hole 284R of the lower second mounting part 253R and the lower third through-hole 283R of the lower second seat part 270R face each other in the front-rear direction X1.

The lower second mounting part 253R is detachably attached to the lower second seat part 270R by use of a lower second fixing member 282R. In this embodiment, the lower second fixing member 282R is a screw member.

The lower second fixing member 282R passes through the fourth through-hole 284R and the lower third through-hole 283R that coaxially face each other in the front-rear direction X1, and is screwed to the lower third through-hole 283R.

As shown in FIG. 11, in this embodiment, a plurality of second fixing members 282L and 282R (for example, two, respectively) are disposed apart from each other in the up-down direction Z1.

As a result of this structure, the first mounting parts 103L and 103R of the first bracket 100 are disposed between the upper end 6m and the lower end 6n of the battery 6 in the up-down direction Z1, and are detachably attached to the second frame part 22. The first mounting part 103L of the first bracket 100 is disposed below the upper second mounting part 213L of the upper second bracket 210 and above the lower second mounting part 253L of the lower second bracket 250 in the up-down direction Z1. The first mounting part 103R of the first bracket 100 is disposed below the upper second mounting part 213R of the upper second bracket 210 and above the lower second mounting part 253R of the lower second bracket 250 in the up-down direction Z1.

The upper second bracket 210 is disposed in front of the battery 6 between the upper end 6m and the lower end 6n of the battery 6. The upper second mounting part 213L of the upper second bracket 210 is detachably attached to the upper end 22cL of the second frame part 22L through the upper second seat part 230L and the stay member 27L. The upper second mounting part 213R of the upper second bracket 210 is detachably attached to the upper end 22cR of the second frame part 22R through the upper second seat part 230R and the stay member 27R.

The lower second bracket 250 is disposed in front of the battery 6 between the upper end 6m and the lower end 6n of the battery 6. The lower second mounting part 253L of the lower second bracket 250 is detachably attached to the lower end 22aL of the second frame part 22 through the lower second seat part 270L and the subframe 600. The lower second mounting part 253R of the lower second bracket 250 is detachably attached to the lower end 22aR of the second frame part 22R through the lower second seat part 270R and the subframe 600.

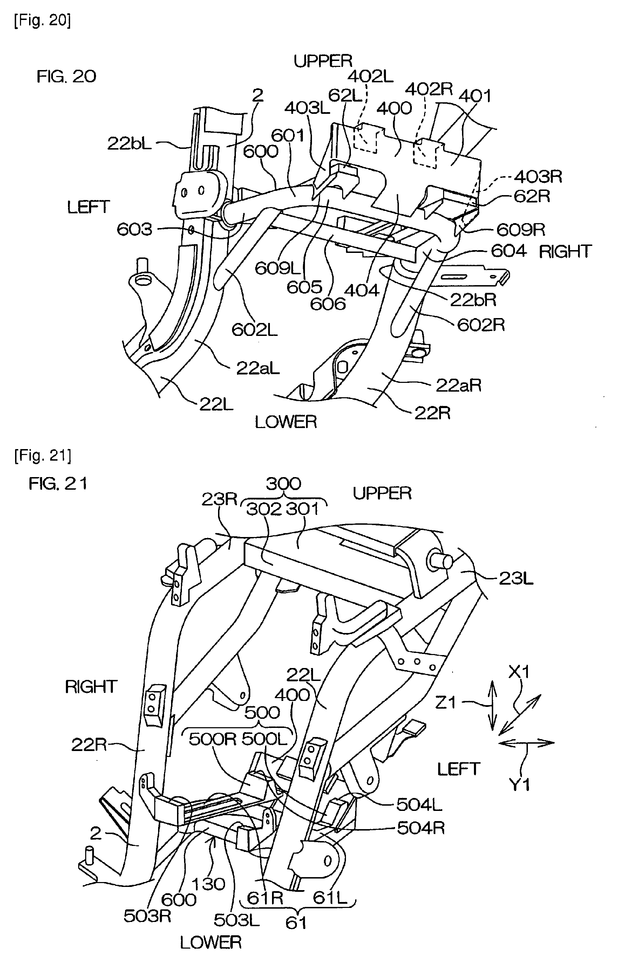

FIG. 20 is a perspective view of a main part around the subframe 600, and shows the subframe 600 viewed from rearwardly obliquely below. The subframe 600 is provided to reinforce the vehicle body frame 2 and to receive the load of the battery 6. The subframe 600 is disposed behind the lower end of the second frame part 22.

The subframe main body 601 has the shape of the capital letter A as a whole, and is laterally symmetrical. The subframe main body 601 consists of a left part 603, a right part 604, a rear part 605, and an intermediate part 606. The left part 603 extends rearwardly from the lower end 22aL of the second frame part 22L. The right part 604 extends rearwardly from the lower end 22aR of the second frame part 22R. The rear part 605 extends in the right-left direction Y1, and is connected to the rear end of the left part 603 and to the rear end of the right part 604. The intermediate part 606 extends in the right-left direction Y1, and is connected to the left part 603 and to the right part 604.

The arm part 602 consists of a left arm part 602L and a right arm part 602R. The left arm part 602L extends from the left part 603 forwardly obliquely downwardly, and is fixed to the lower end 22aL of the second frame part 22L. The right arm part 602R extends from the right part 604 forwardly obliquely downwardly, and is fixed to the lower end 22aR of the second frame part 22R.

As shown in FIG. 17B, a stay part 607L is fixed to the intermediate part 606 by, for example, welding. A nut member 608L is fixed to the lower side of the stay part 607L. A screw member 64L that passes through the through-hole 63L of the left unit main body 62L and through the nut member 608L is provided. The screw member 64L is screwed to the nut member 608L.

A stay part 609L is fixed to the rear part 605 by, for example, welding. A nut member 610L is fixed to the lower side of the stay part 609L. A screw member 66L that passes through the through-hole 65L of the left unit main body 62L and through the nut member 610L is provided. The screw member 66L is screwed to the nut member 610L.

The left supporting unit 61L is fixed to the subframe 600 by the screw members 64L and 66L. Accordingly, the left supporting unit 61L is not fixed to the subframe 600 by welding. As a result, the left supporting unit 61L can be prevented from being deformed by heat when the left supporting unit 61L is fixed to the subframe 600. Therefore, the left supporting unit 61L and the battery 6 can be prevented from having their inaccurate relative positions. Therefore, the battery 6 can be accurately disposed at an intended place.

As shown in FIG. 18B, a stay part 607R is fixed to the intermediate part 606 of the subframe main body 601 by, for example, welding. A nut member 608R is fixed to the lower side of the stay part 607R. A screw member 64R that passes through a through-hole 63R of the right unit main body 62R and through the nut member 608R is provided. The screw member 64R is screwed to the nut member 608R.

A stay part 609R is fixed to the rear part 605 by, for example, welding. A nut member 610R is fixed to the lower side of the stay part 609R. A screw member 66R that passes through a through-hole 65R of the right unit main body 62R and through the nut member 610R is provided. The screw member 66R is screwed to the nut member 610R.

The right supporting unit 61R is fixed to the subframe 600 by means of the screw members 64R and 66R. Accordingly, the right supporting unit 61R is not fixed to the subframe 600 by welding. As a result, the right supporting unit 61R can be prevented from being deformed by heat when the right supporting unit 61R is fixed to the subframe 600. Therefore, the right supporting unit 61R and the battery 6 can be prevented from having their inaccurate relative positions. Therefore, the battery 6 can be accurately disposed at an intended place.

As shown in FIG. 7, the fifth bracket 500 is supported by the second frame part 22 of the vehicle body frame 2 through the subframe 600, and supports the battery 6 from below the battery 6. The fifth bracket 500 supports the battery 6 in a state in which the battery 6 is inclined so that the upper part 6a of the battery 6 is located behind the lower part 6b of the battery 6. In other words, the fifth bracket 500 supports the battery 6 in a state in which the battery 6 is inclined rearwardly obliquely upwardly.

FIG. 21 is a perspective view showing a state in which the battery 6 has been detached from the vehicle body frame 2, viewed from obliquely before. A battery supporting part 130 that supports the lower part 6b of the battery 6 is formed by the subframe 600, the fourth bracket 400, and the supporting unit 61. The fifth bracket 500 is provided at the supporting unit 61. The fifth bracket 500 includes the left fifth bracket 500L disposed at the left supporting unit 61L and the right fifth bracket 500R disposed at the right supporting unit 61R. A space is provided between the left fifth bracket 500L and the right fifth bracket 500R, so that the battery 6 is exposed downwardly. As a result, the battery 6 is efficiently cooled by a wind received while the two-wheeled electric vehicle 1 is traveling.

As shown in FIG. 17A and FIG. 17B, the left fifth bracket 500L is disposed behind the lower second seat part 270L in a side view. The left fifth bracket 500L is provided to support a left end part 6p of the battery 6 from below. The left fifth bracket 500L includes a front part 501L and a rear part 502L both of which protrude upwardly from the left unit main body 62.

The position of the front part 501L coincides with that of the lower second seat part 270L in the front-rear direction X1. The front part 501L is disposed on the left side of the lower second seat part 270L. The upper surface of the front part 501L serves as a front receiving part 503L. The front receiving part 503L extends rearwardly obliquely downwardly.

The rear part 502L is disposed near the rear part 605 of the subframe main body 601. The upper surface of the rear part 502L serves as a rear receiving part 504L. The rear receiving part 504L extends rearwardly obliquely downwardly.

The front receiving part 503L supports the third concave 46e of the lower end of the left front of the battery 6 from below. The rear receiving part 504L supports the seventh concave 47e of the lower end of the left rear of the battery 6 from below.

As shown in FIG. 18A and FIG. 18B, the right fifth bracket 500R is provided to support a right end part 6q of the battery 6 from below. The right fifth bracket 500R includes a front part 501R and a rear part 502R both of which protrude upwardly from the right unit main body 62R.

The position of the front part 501R coincides with that of the lower second seat part 270R in the front-rear direction X1. The front part 501R is disposed on the right side of the lower second seat part 270R. The upper surface of the front part 501R serves as a front receiving part 503R. The front receiving part 503R extends rearwardly obliquely downwardly.

The rear part 502R is disposed near the rear part 605 of the subframe main body 601. The upper surface of the rear part 502R serves as a rear receiving part 504R. The rear receiving part 504R extends rearwardly obliquely downwardly.

The front receiving part 503R supports the fourth concave 46f of the lower end of the right front of the battery 6 from below. The rear receiving part 504R supports the seventh concave 47f of the lower end of the right rear of the battery 6 from below.

As shown in FIG. 21, according to the above-mentioned structure, the four corners of the battery 6 can be supported from below by the four receiving parts 503L, 504L, 503R, and 504R.

The third bracket 300 is formed by, for example, applying press working to a metallic plate. The third bracket 300 is disposed between the third frame parts 23L and 23R in the right-left direction Y1. The third bracket 300 includes a third bracket main body 301 and a third battery supporting part 302.

The third bracket main body 301 is shaped like a flat plate that extends substantially horizontally. Both the right and left ends of the third bracket main body 301 are fixed to (i.e., are supported by) the third frame part 23L and the third frame part 23R by, for example, welding.

The third battery supporting part 302 extends from the front end of the third bracket main body 301 forwardly obliquely downwardly. The third battery supporting part 302 is disposed in the whole area of the third frame parts 23L and 23R in the right-left direction Y1.

As shown in FIG. 7, the third battery supporting part 302 is in contact with the support projection 53 of the battery 6, and supports the battery 6 from behind. The third battery supporting part 302 is disposed so as to face the upper second battery supporting part 216 of the upper second bracket 210 with the battery 6 therebetween.

As shown in FIG. 20, the fourth bracket 400 is formed by, for example, applying press working to a metallic plate. The fourth bracket 400 is disposed at the rear part 605 of the subframe main body 601. The fourth bracket 400 includes a fourth bracket main body 401, a fourth battery supporting part 402, a left connection part 403L, a right connection part 403R, and a lower connection part 404.

The fourth bracket main body 401 is shaped like a rectangle that extends in the right-left direction Y1. The left connection part 403L extends downwardly from the left end of the fourth bracket main body 401, and is fixed to the stay part 609L by, for example, welding. The right connection part 403R extends downwardly from the right end of the fourth bracket main body 401, and is fixed to the stay part 609R by, for example, welding. The lower connection part 404 extends downwardly from the fourth bracket main body 401, and is fixed to the rear part 605 of the subframe main body 601 by, for example, welding. According to this structure, the fourth bracket 400 is supported by the second frame parts 22L and 22R through the subframe 600.

The fourth battery supporting parts 402L and 402R extend forwardly from the upper end of the fourth bracket main body 401. The fourth battery supporting parts 402L and 402R are shaped laterally symmetrically.

As shown in FIG. 7, the fourth battery supporting part 402 is disposed in front of the fourth bracket main body 401. The fourth battery supporting part 402 supports the corresponding support projection 54 of the battery 6 from behind. The fourth battery supporting part 402 is disposed so as to face the lower second battery supporting part 256 of the lower second bracket 250 with the battery 6 therebetween.

Next, a description will be given of an example of the operation of detaching the battery 6 and the operation of attaching the battery 6 in the two-wheeled electric vehicle 1.

To detach the battery 6 from the vehicle body frame 2, the rear cover 33 of the vehicle body cover 7 is first detached as shown in FIG. 11. As a result, the battery supporting device 57 and the battery 6 are exposed. In this embodiment, the seat 37 is not necessarily required to be detached although the seat 37 is beforehand detached from the seat supporting part 102 of the first bracket 100 before detaching the battery 6.

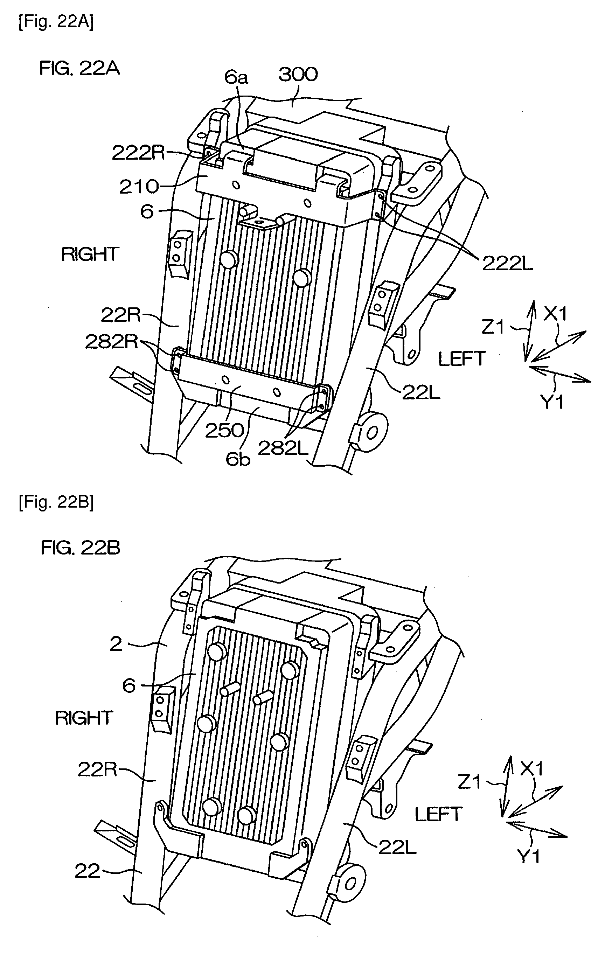

Thereafter, the first fixing members 111L and 111R are detached by use of tools (not shown). As a result, as shown in FIG. 22A, the first bracket 100 is detached from the second frame parts 22L and 22R. Furthermore, the second fixing members 222L and 222R and the second fixing members 282L and 282R are detached by use of the tools. As a result, as shown in FIG. 22B, the upper second bracket 210 and the lower second bracket 250 are detached from the second frame parts 22L and 22R.

As a result, a state is reached in which members that are obstacles to forwardly moving the battery 6 are not placed in front of the battery 6 (part of which is not shown). In this state, an operator displaces the battery 6 forwardly, and moves the battery 6 from the vehicle body frame 2 to a wide space in front of the second frame part 22. As a result, the battery 6 is taken out as shown in FIG. 21.

On the other hand, when the battery 6 is attached to the vehicle body frame 2, process steps opposite to the above-mentioned process steps are performed. In more detail, the battery 6 is substantially horizontally moved rearwardly from the wide space in front of the second frame part 22, and is put on the fifth bracket 500 (see FIG. 22B). In this state, the upper second bracket 210 is disposed in front of the upper part 6a of the battery 6 as shown in FIG. 22A, and the lower second bracket 250 is disposed in front of the lower part 6b of the battery 6. In this state, the second fixing members 222L and 222R and the second fixing members 282L and 282R are attached by use of the tools. As a result, the upper second bracket 210 and the lower second bracket 250 are attached to the second frame parts 22L and 22R.

Thereafter, as shown in FIG. 11, the first bracket 100 is allowed to face the central part 6k of the battery 6. In this state, the first fixing members 111L and 111R are attached by use of tools (not shown). As a result, the first bracket 100 is attached to the second frame parts 22L and 22R. Thereafter, the seat 37 and the rear cover 33 are attached, and the replacement operation of the battery 6 is completed.

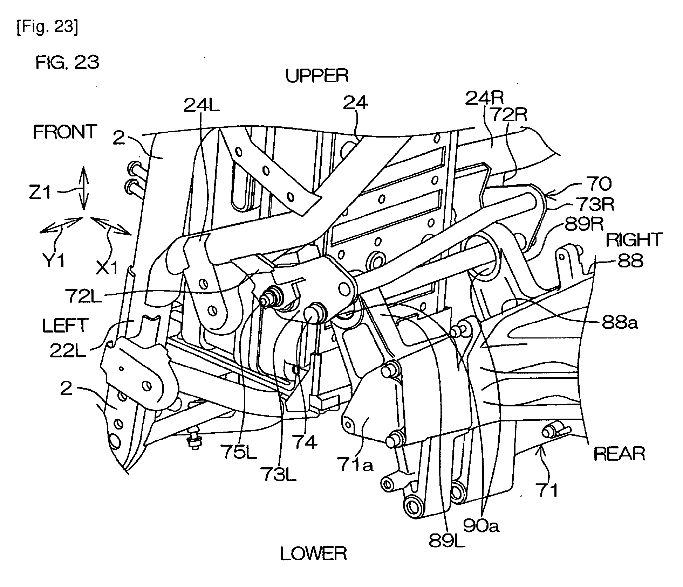

FIG. 23 is a perspective view showing the front end of the connecting mechanism 70 and the front end of the swing unit 71. The swing unit 71 is swingably connected to the vehicle body frame 2 through the connecting mechanism 70.

The connecting mechanism 70 includes fixed parts 72L and 72R that are fixed to the left-and-right pair of fourth frame parts 24, movable parts 73L and 73R, the first pivot shaft 74, and the second pivot shafts 75L and 75R. The first pivot shaft 74 is one example of a "pivot part" of the present invention. Each of the fixed parts 72L and 72R is one example of a "second fixed part" of the present invention, and is a plate member shaped like the capital letter U that is opened downwardly.

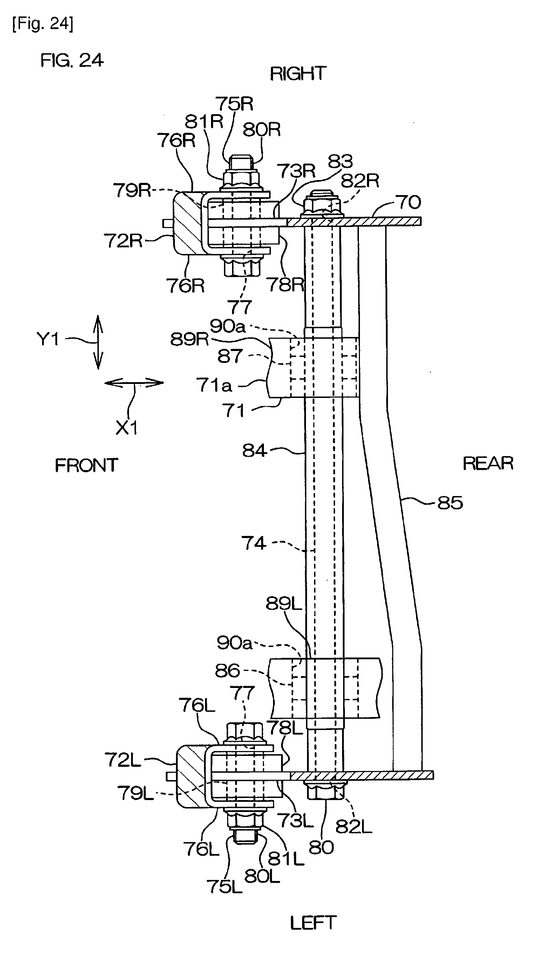

FIG. 24 is a partially sectional view of the front end of the connecting mechanism 70 and the front end of the swing unit 71, which are viewed from above. The left fixed part 72L includes the left-and-right pair of plates 76L and 76L, and the right fixed part 72R includes the left-and-right pair of plates 76R and 76R.

Through-holes 77 are formed in plates 76L and 76L of the fixed part 72L, respectively. The plate-like movable part 73L is disposed between the plates 76L and 76L. A hole is formed in the front of the movable part 73L, and a reinforcement pipe 78L is fixed to this hole. A damper 79L and the second pivot shaft 75L are inserted in the reinforcement pipe 78L. The damper 79L is formed by use of a cylindrical elastic member such as rubber. The second pivot shaft 75 is a shaft part of a bolt member 80L, and passes through the damper 79L and through the through-holes 77 of the plates 76L and 76L. A nut 81L is fastened with the bolt member 80L.

Through-holes 77 are formed in the plates 76R and 76R of the fixed part 72R, respectively. The plate-like movable part 73R is disposed between the plates 76R and 76R. A hole is formed in the front of the movable part 73R, and a reinforcement pipe 78R is fixed to this hole. A damper 79R and the second pivot shaft 75R are inserted in the reinforcement pipe 78R. The damper 79R is formed by use of a cylindrical elastic member such as rubber. The second pivot shaft 75R is a shaft part of a bolt member 80R, and passes through the damper 79R and through the through-holes 77 of the plates 76R and 76R. The second pivot shafts 75L and 75R are disposed coaxially. A nut 81R is fastened with the bolt member 80R.

Through-holes 82L and 82R are formed in the rear of the movable parts 73L and 73R, respectively. The first pivot shaft 74 is inserted in the through-holes 82L and 82R. The first pivot shaft 74 is a shaft part of the bolt member 80. A nut 83 is fastened with the bolt member 80. A cylindrical collar 84 is fit to the first pivot shaft 74. The collar 84 is disposed between the movable parts 73L and 73R. A reinforcement bar 85 is disposed adjacent to the collar 84 between the movable parts 73L and 73R. Connection rigidity between the movable parts 73L and 73R is secured by the collar 84 and the reinforcement bar 85. A pair of bearings 86 and 87 are attached to the outer periphery of the collar 84. These bearings 86 and 87 are attached to the front end 71a of the swing unit 71.

According to this structure, the movable parts 73L and 73R can swing around the second pivot shafts 75L and 75R, respectively, within a range in which the dampers 79L and 79R are elastically deformable. In other words, the swing unit 71 can swing around each of the second pivot shafts 75L and 75R within a range in which the dampers 79L and 79R are elastically deformable. Additionally, the swing unit 71 can swing around the first pivot shaft 74. In this embodiment, the angular range in which the swing unit 71 can swing around the first pivot shaft 74 may be 10-odd degrees, or the angular range in which the swing unit 71 can swing around the second pivot shafts 75L and 75R may be several degrees.

As shown in FIG. 23, the swing unit 71 includes a motor case 88 and inclined parts 89L and 89R formed at the front end of the motor case 88. The front end 71a of the swing unit 71 includes a front end 88a of the motor case 88 and the inclined parts 89L and 89R. The inclined parts 89L and 89R are aligned with each other in the right-left direction Y1.

Each of the inclined parts 89L and 89R extends from the motor case 88 forwardly obliquely upwardly. A through-hole 90a is formed in the front end of each of the inclined parts 89L and 89R. As shown in FIG. 24, the corresponding bearings 86 and 87 are attached to the through-holes 90a and 90a, respectively. This allows the inclined parts 89L and 89R (swing unit 71) to swing around the first pivot shaft 74.

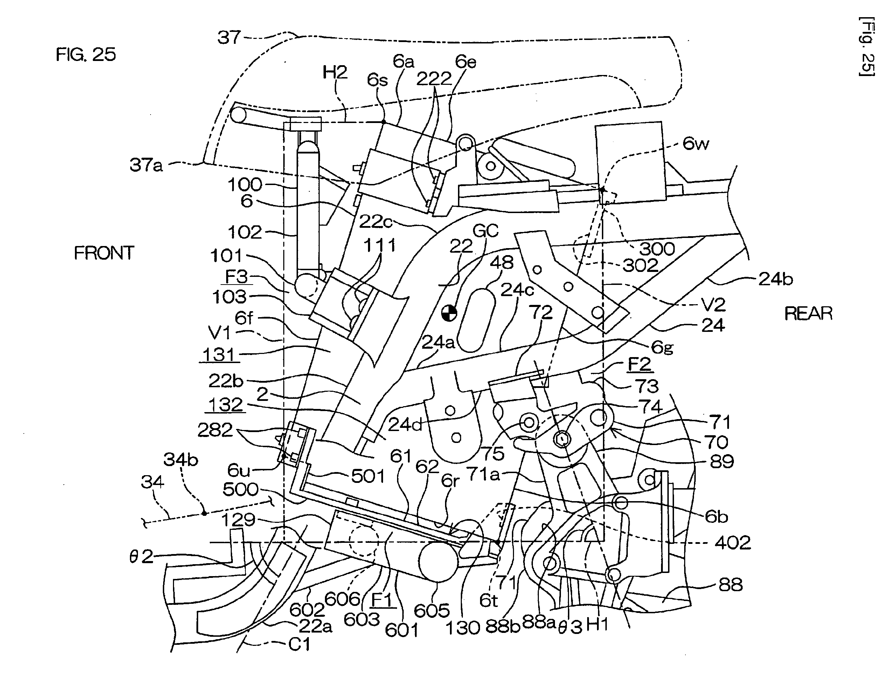

FIG. 25 is a left side view of the main part for describing a layout around the battery 6 in a side view, and shows the second frame part 22 a part of which has been cut away. Based on a state of each component viewed sidewardly, a description is given when reference is made to FIG. 25. A region surrounded by a first vertical plane V1 that passes through the front end 6u of the battery 6, by a first horizontal plane H1 that passes through the lower end 6t of the battery 6, and by the battery 6 (the lower surface 6r of the battery 6) is defined as a first region F1.

At least one part of the battery supporting part 130 is disposed in the first region F1. In this embodiment, a front 129 of each of the left and right parts 603 and 604 (not shown) of the subframe main body 601 of the battery supporting part 130 and the intermediate part 606 are disposed in the first region F1.

Additionally, the front and the middle of the supporting unit 61 are disposed in the first region F1. Accordingly, the front part 501 of the fifth bracket 500 is disposed in the first region F1.

A part of the battery supporting part 130 that is located below the first region F1 is disposed below the upper end 34b of the feet-putting part 34. In this embodiment, the rear part 605 of the subframe main body 601 and the arm part 602 are disposed below the upper end 34b of the feet-putting part 34. The lower end 6t of the battery 6 is disposed below the upper end 34b of the feet-putting part 34. A boundary between the lower end 22a and the middle 22b of the second frame part 22 is disposed in the first region F1.

A region surrounded by a second vertical plane V2 that passes through a rear end 6w of the battery 6, by the first horizontal plane H1, and by the battery 6 (the rear surface 6g of the battery 6) is defined as a second region F2 in a side view.

The first pivot shaft 74 is disposed in the second region F2. Additionally, the third and fourth battery supporting parts 302 and 402 of the third and fourth brackets 300 and 400 are disposed in the second region F2. Still additionally, the inclined part 89 of the front end 71a of the swing unit 71 is disposed in the second region F2.

The inclined part 89 extends from the front end 88a of the motor case 88 forwardly obliquely upwardly, and is connected to the first pivot shaft 74. The inclined part 89 is one example of a "connection part of a swing unit" of the present invention. The inclined part 89 is inclined with respect to the first horizontal plane H1. An inclination angle theta 3 (acute angle) of the inclined part 89 with respect to the first horizontal plane H1 is greater than an inclination angle theta 2 of the second frame part 22. As a result, the inclined part 89 is directed to become closer to the vertical than the second frame part 22.

The inclined part 89 is located behind the forward end 88b of the motor case 88. At least one part of the inclined part 89 is located in front of the rear end 6w of the battery 6. In this embodiment, most of the inclined part 89 excluding the rear of the base end of the inclined part 89 is located in front of the rear end 6w of the battery 6. A part of the inclined part 89 located in front of the rear end 6w of the battery 6 is disposed in the second region F2.

A region surrounded by the second horizontal plane H2 that passes through an upper end 6s of the battery 6, by the first vertical plane V1, and by the battery 6 (the front surface 6f of the battery 6) is defined as a third region F3 in a side view.

At least one part of the first bracket 100 is disposed in the third region F3. In this embodiment, the seat supporting part 102 of the first bracket 100, the first bracket main body 101, and the front part of the first mounting part 103 are disposed in the third region F3.

The front end 71a of the swing unit 71 and the connecting mechanism 70 are disposed below the fourth frame part 24 in a side view. Accordingly, the first pivot shaft 74 is disposed below the fourth frame part 24. The first pivot shaft 74 is disposed at a higher position than the upper end 34b of the feet-putting part 34.

The fourth frame part 24 includes a straight part 24c that extends straight from the front end 24a. This straight part 24c is one example of a "first intermediate part" of the present invention. The straight part 24c is disposed in the rear region 132, and is aligned with the battery 6 in the right-left direction Y1. The straight part 24c is provided with the fixed part 72. The straight part 24c is connected to the first pivot shaft 74 through the fixed part 72, the second pivot shaft 75, and the movable part 73.

The first fixing member 111 of the first bracket 100, an upper second fixing member 222, and a lower fixing member 282 are disposed in the front region 131 of the battery 6 in a side view.

As described above, according to this embodiment, the battery 6 is postured to be inclined rearwardly obliquely upwardly. Accordingly, the height of the battery 6 (i.e., the length of the battery in the direction in which the battery is inclined) can be increased without increasing the height of the battery 6 in the up-down direction Z1. As a result, the battery 6 can be enlarged, and the position of the seat 37 is not required to be heightened, and the ride quality of the vehicle can be improved, i.e., an easy mount/dismount onto/from the two-wheeled electric vehicle 1 can be realized, and an easy touchdown of driver's feet on the ground when the vehicle is stopped can be realized.

The battery supporting part 130 supports the lower part 6b of the battery 6. Accordingly, even if the battery 6 is heavy and large in size, the battery 6 can be firmly supported, and therefore the large-sized battery 6 can be mounted in the two-wheeled electric vehicle 1. Additionally, at least one part of the battery supporting part 130 is disposed in the first region F1. As a result, the position of the battery supporting part 130 and the position of the battery 6 can be allowed to coincide with each other in the up-down direction Z1. As a result, the battery unit composed of the battery supporting part 130 and the battery 6 can be shortened in the up-down direction Z1. Therefore, the projection amount of the battery supporting part 130 protruding downwardly with respect to the battery 6 can be reduced, and therefore the battery supporting part 130 that is strongly-built resulting from its large size can be disposed, and the battery 6 can be enlarged. Accordingly, the arrangement space for the battery supporting part 130 is secured not only by allowing the battery 6 to assume an inclined posture but also by using the first region F1 created by inclining the battery 6. Therefore, it becomes possible to realize the synergistic effect of the enlargement of the battery 6 resulting from the inclination arrangement of the battery 6 and the further enlargement of the battery 6 resulting from the effective utilization of the space produced by this inclination arrangement.

Additionally, the whole of the battery supporting part 130 can be disposed at a lower position in proportion to a decrease in the projection amount of the battery supporting part 130 protruding below the battery 6. The feet-putting part 34 is not required to be disposed at a high position in order to avoid the battery supporting part 130 because the battery supporting part 130 is disposed at a low position. Therefore, the feet-putting part 34 can be disposed at a lower position. As a result, the height of the feet-putting part 34 from the road surface A1 can be lowered, and therefore the ride quality of the vehicle can be further improved. Therefore, an effect by which the height of the feet-putting part 34 from the road surface A1 can be made lower can be fulfilled by a combination of a structure in which the battery 6 is not disposed below the feet-putting part 34 and a structure in which the battery supporting part 130 is disposed at a lower position.

Additionally, the position of the first pivot shaft 74 and the position of the battery 6 can be allowed to coincide with each other in the front-rear direction X1 by disposing the first pivot shaft 74 in the second region F2. As a result, the first pivot shaft 74 can be disposed at a more forward position. Therefore, the swing unit 71 connected to the first pivot shaft 74 can be disposed at a more forward position. As a result, the overall length of the two-wheeled electric vehicle 1 can be made shorter. In other words, the present invention adopts an arrangement in which the battery 6 is disposed in an inclined posture and an arrangement in which the first pivot shaft 74 is disposed in the second region F2 obtained by the arrangement of the inclined battery 6.

This makes it possible to fulfill an excellent synergistic effect that enables the simultaneous realization of two different effects, i.e., an effect by which the battery 6 can be enlarged without sacrificing its ride quality and an effect by which the overall length of the two-wheeled electric vehicle 1 can be shortened. Moreover, heavy components can be concentratively disposed at a substantially central position in the front-rear direction X1 by placing the battery 6, which is a heavy component, below the seat 37. As a result, the load of the two-wheeled electric vehicle evenly acts on the front wheel 3 and the rear wheel 4, and therefore the two-wheeled electric vehicle 1 can be easily driven, and can be more easily handled when the two-wheeled electric vehicle 1 travels and when a driver moves the two-wheeled electric vehicle 1 in a state in which the driver has dismounted from the two-wheeled electric vehicle 1.

Therefore, structural elements of the two-wheeled electric vehicle 1, such as a structure in which the battery 6 is in an inclined state, a structure in which the battery supporting part 130 is disposed in the first region F1, and a structure in which the first pivot shaft 74 is disposed in the second region F2, act in combination with each other as a whole. As a result, many excellent effects, such as the enlargement of the battery 6, the improvement in the ride quality of the vehicle, the simplification of the handling of the vehicle, and the shortening of the overall length of the vehicle, can be fulfilled synergistically.

The inclination angle theta 1 of the battery 6 is set to be greater than the inclination angle theta 2 of the second frame part 22 in a side view. As a result, the length of the battery 6 in the front-rear direction X1 can be shortened. Therefore, the overall length of the two-wheeled electric vehicle 1 can be made shorter.

Additionally, the synergistic effect of the advantage that the battery 6 can be enlarged and the advantage that the wheelbase of the two-wheeled electric vehicle 1 can be shortened can be fulfilled from a combination of a structure in which the first pivot shaft 74 is disposed in the second region F2 in a side view and a structure in which the area of the rear region 132 is greater than that of the front region 131 in a side view.

Additionally, the projection amount of the battery 6 protruding to the front of the second frame part 22 can be reduced by making the area of the rear region 132 greater than that of the front region 131 without making the battery 6 smaller in size. Accordingly, the upper part of the battery 6 can be reliably prevented from coming into contact with thighs of a driver sitting on the seat 37. Therefore, the driver can be prevented from feeling uncomfortable while riding on the two-wheeled electric vehicle 1, and comfortability can be improved.

Additionally, the inclination angle theta 3 of the inclined part 89 of the swing unit 71 is set to be greater than the inclination angle theta 2 of the second frame part 22. Therefore, the swing unit 71 can be more disposed in the second region F2. Therefore, the swing unit 71 can be disposed at a more forward position. As a result, the overall length of the two-wheeled electric vehicle 1 can be made shorter.

Additionally, the inclined part 89 of the swing unit 71 is located behind the forward end 88b of the motor case 88, and at least one part of the inclined part 89 is located in front of the rear end 6w of the battery 6. Therefore, the length of the two-wheeled electric vehicle 1 in the front-rear direction X1 can be made compact while sufficiently securing a space for containing the electric motor 5 by securing the length of the motor case 88 in the front-rear direction X1.

Additionally, the straight part 24c of the fourth frame part 24 coincides with the battery 6 in position in the right-left direction Y1, and the first pivot shaft 74 is connected thereto through the fixed part 72. Therefore, an arrangement in which the battery 6 is placed between the left-and-right pair of second frame parts 22 can be realized, and the first pivot shaft 74 disposed apart from the second frame part 22 can be connected by the fourth frame part 24. Therefore, the first pivot shaft 74 can be disposed without being restricted by the arrangement of the second frame parts 22.

Additionally, a part of the first bracket 100 is disposed in the third region F3 obtained by placing the inclined battery 6. Therefore, the projection amount of the first bracket 100 protruding forwardly with respect to the battery 6 can be reduced. Therefore, a space around the battery 6 can be used more effectively. As a result, the overall length of the two-wheeled electric vehicle 1 can be made shorter. Additionally, a wide space can be secured in front of the seat 37, and therefore a space in which driver's feet are put can be made wider. Therefore, the ride quality of the driver can be further improved. In other words, different effects, i.e., the shortening of the overall length of the two-wheeled electric vehicle 1 and the improvement in the ride quality of the driver can be simultaneously fulfilled.

### <Second Embodiment>

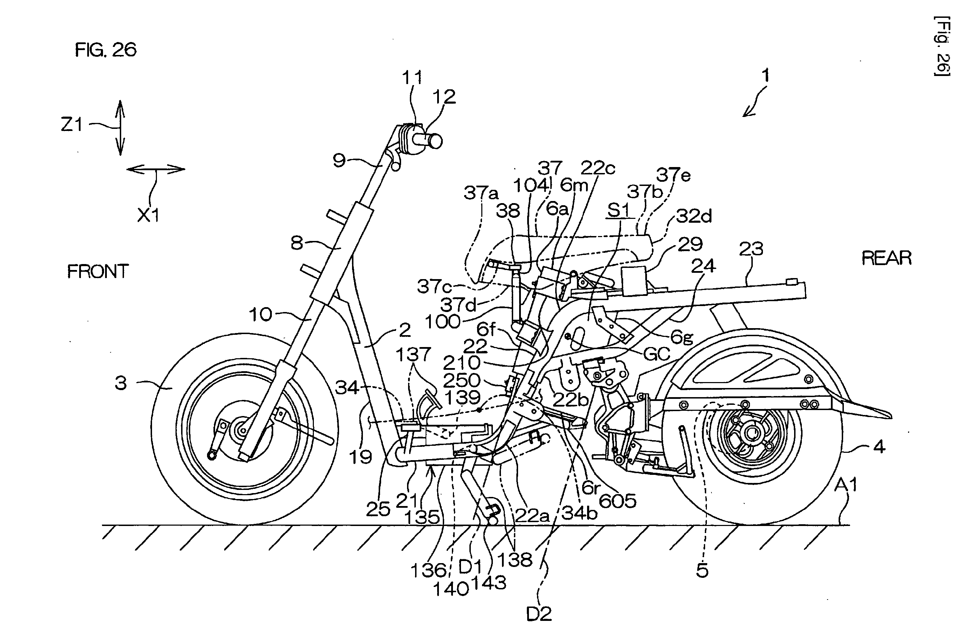

FIG. 26 is a left side view of a main part according to a second embodiment of the present invention, and shows a state in which a vehicle body cover and other components have been detached. Hereinafter, differences between the second embodiment and the first embodiment will be chiefly described. The same reference numeral is given to the same structure depicted in the drawings as in the first embodiment, and a description of the same structure is omitted.

In this embodiment, a stand device 135 is additionally provided. The stand device 135 is provided to maintain a standing posture of the two-wheeled electric vehicle 1 in a state in which the front wheel 3 and the rear wheel 4 are in contact with the road surface A1. The stand device 135 includes a device body 136 attached to the first frame part 21 below the feet-putting part 34, an operation pedal 137, and a stand member 138.

The operation pedal 137 is provided for a driver sitting on the seat 37 to perform an operation. The operation pedal 137 can be displaced around a pedal shaft 139 provided in the device body 136. The stand member 138 can be displaced around a spindle 140 that extends in the right-left direction Y1 and that is disposed in the device body 136. The stand member 138 is structured to be displaced around the spindle 140 by operating the operation pedal 137.

The stand member 138 is displaced around the spindle 140, and, as a result, can be displaced to a contact position being in contact with the road surface A1 and be displaced to a separation position separated from the road surface A1. In FIG. 26, the stand member 138 occupying the contact position is shown by a solid line, and the stand member 138 occupying the separation position is shown by alternate long and two short dashed lines.

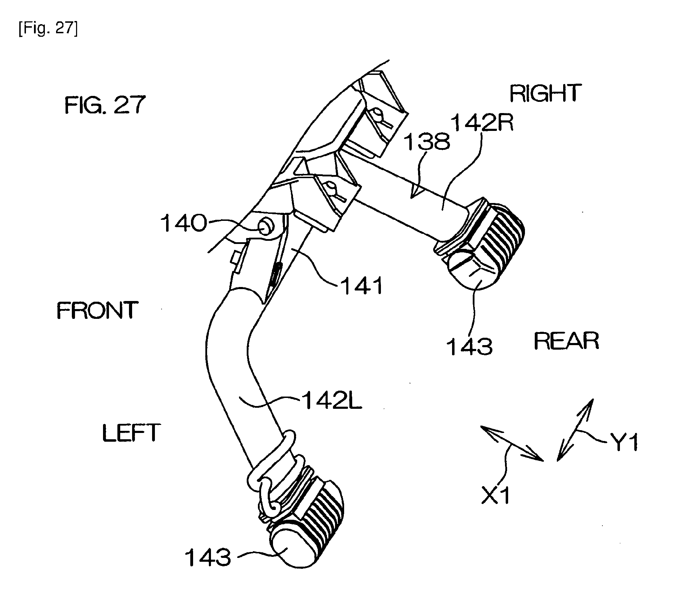

FIG. 27 is a perspective view of the stand member 138. The stand member 138 is shaped like the capital letter U. The stand member 138 includes a first part 141 that is connected to the spindle 140 and that extends in the right-left direction Y1 and a pair of second parts 142L and 142R that extend from both ends of the first part 141 toward the rear of the vehicle.

The second part 142L extends leftwardly as the second part 142L recedes from the first part 141. The second part 142R extends rightwardly as the second part 142R recedes from the first part 141. A contact member 143 is disposed at the distal end of each of the second parts 142L and 142R. In this embodiment, the contact member 143 is formed by use of a rubber member.

As shown in FIG. 26, the contact member 143 is in contact with the road surface A 1 when the stand member 138 occupies the contact position. Therefore, a standing posture of the two-wheeled electric vehicle 1 can be maintained in a state in which the front wheel 3, the contact member 143 of the stand member 138, and the rear wheel 4 are in contact with the road surface A1.

At this time, the contact member 143 is located between a straight line D1 passing through the front surface 6f (forward edge) of the battery 6 and a straight line D2 passing through the rear surface 6g (rearward edge) of the battery 6 in a side view.

When the stand member 138 occupies the separation position, the contact member 143 is adjacent to the rear part 605 of the subframe main body 601 in a side view.

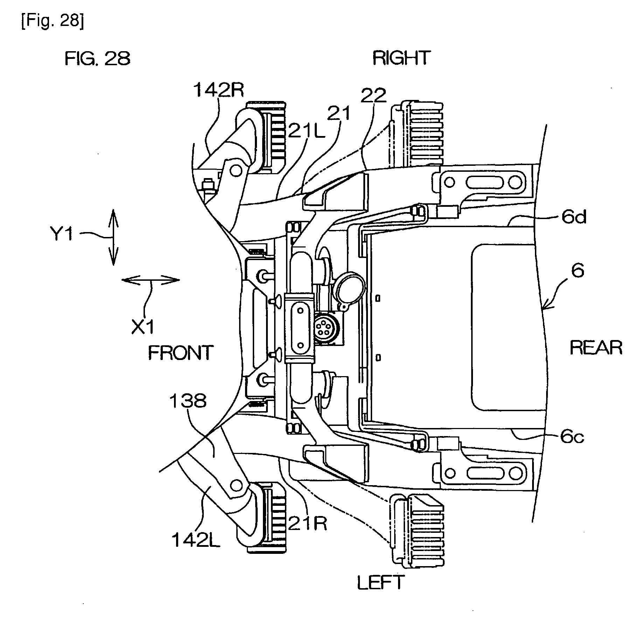

FIG. 28 is a plan view of a main part around the stand member 138. The battery 6 is disposed between the pair of second parts 142L and 142R of the stand member 138 in the right-left direction Y1 in a plan view. The second parts 142L and 142R of the stand member 138 occupying the contact position allow the first frame part 21 to be placed therebetween in the right-left direction Y1 in a plan view. The second parts 142L and 142R of the stand member 138 occupying the separation position allow the second frame part 22 and the battery 6 to be placed therebetween in the right-left direction in a plan view.

According to this embodiment, the position of the contact member 143 being in contact with the ground in the front-rear direction X1 can be set so as not to become too close to the front wheel 3 and so as not to become too close to the rear wheel 4. Therefore, a stably standing posture of the two-wheeled electric vehicle 1 can be maintained by the stand device 135, the front wheel 3, and the rear wheel 4.

The stand member 138 is disposed in the shape of the capital letter U so as to avoid the battery 6 in a plan view. Therefore, the battery 6 can be made longer downwardly and can be made greater in size without being obstructed by the stand member 138.

### <Other Embodiments>

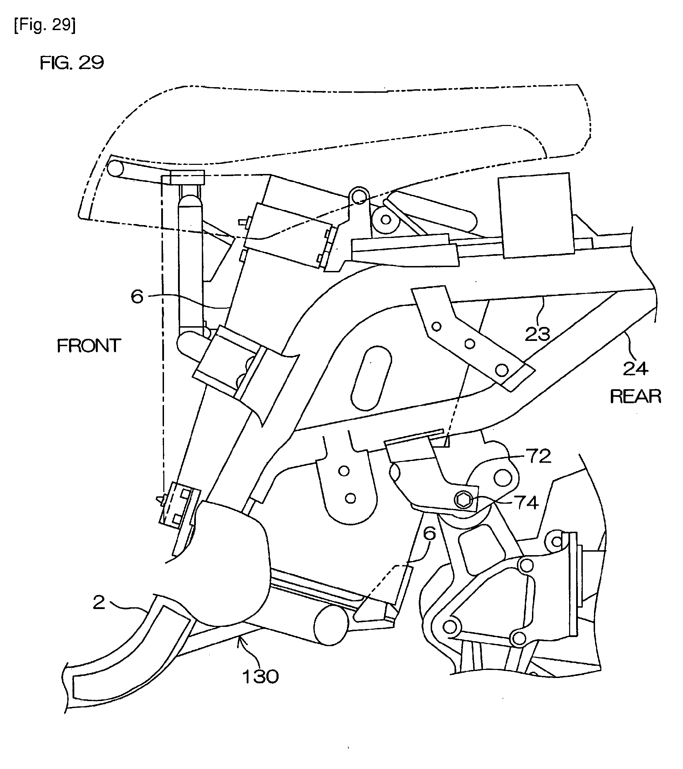

Although a description has been given of a structure in which the first pivot shaft 74 and the second pivot shafts 75L and 75R are disposed in the connecting mechanism 70, the present invention is not limited to this structure. The second pivot shafts 75L and 75R may be removed, and, as shown in FIG. 29, the first pivot shaft 74 may be arranged so as to pass through the fixed part 72.

Although a description has been given of a structure in which a part of the battery supporting part 130 is disposed below the upper end 34b of the feet-putting part 34, the present invention is not limited to this structure. All of the battery supporting part 130 may be disposed below the upper end 34b of the feet-putting part 34.

Although a description has been given of a structure in which a part of the battery supporting part 130 is disposed in the first region F1 in a side view, the present invention is not limited to this structure. All of the battery supporting part 130 may be disposed in the first region F1 in a side view.

Although a description has been given of a structure in which a part of the first bracket 100 is disposed in the third region F3 in a side view, the present invention is not limited to this structure. All of the first bracket 100 may be disposed in the third region F3 in a side view.

Although a description has been given of a structure in which the frame main body 20 of the vehicle body frame 2 has a laterally symmetrical shape, the present invention is not limited to this structure. The frame main body 20 may have a laterally asymmetrical shape. For example, at least one of the first to fourth frame parts 21 to 24 of the frame main body 20 may have a laterally asymmetrical shape.

In addition to these modifications, various design changes can be made within the scope of the appended claims.

### Reference Signs List

- 1: Two-wheeled electric vehicle
- 2: Vehicle body frame
- 3: Front wheel
- 3a: Upper end of front wheel
- 4: Rear wheel
- 5: Electric motor
- 6: Battery
- 6a: Upper part of battery
- 6b: Lower part of battery
- 6s: Upper end of battery
- 6t: Lower end of battery
- 6u: Front end of battery
- 6w: Rear end of battery
- 21: First frame part
- 22: Second frame part
- 23: Third frame part
- 24: Fourth frame part
- 24a: Front end of fourth frame part
- 24b: Rear end of fourth frame part
- 24c: Straight part (first intermediate part)
- 34: Feet-putting part
- 34b: Upper end of feet-putting part
- 37: Seat
- 71: Swing unit
- 72: Fixed part (second intermediate part)
- 74: First pivot shaft (pivot part)
- 88: Motor case (casing)
- 88a: Front end (front part) of motor case
- 88b: Forward end of motor case
- 89: Inclined part (connection part)
- 100: First bracket (seat bracket)
- 130: Battery supporting part
- 131: Front region
- 132: Rear region
- 135: Stand device
- 138: Stand member
- 140: Spindle
- 141: First part (of stand member)
- 142: Second part (of stand member)
- 143: Contact member
- A1: Road surface
- D1: Straight line (that passes through a forward edge of the battery)
- D2: Straight line (that passes through a rearward edge of the battery)
- F1: First region
- F2: Second region
- F3: Third region
- H1: First horizontal plane
- H2: Second horizontal plane
- L1: Length of battery (in a vehicle front-rear direction)
- L2: Length of battery (in a vehicle up-down direction)
- V1: First vertical plane
- V2: Second vertical plane
- X1: Vehicle front-rear direction
- Y1: Vehicle right-left direction
- Z1: Vehicle up-down direction
- theta 1: Inclination angle of battery
- theta 2: Inclination angle of second frame part
- theta 3: Inclination angle of inclined part

## Claims

1. A two-wheeled electric vehicle comprising:
a front wheel (3);
a vehicle body frame (2), the vehicle body frame (2) including:
a left-and-right pair of first frame parts (21) that are disposed below an upper end of the front wheel (3) behind the front wheel (3) and that extend in a vehicle front-rear direction,
a left-and-right pair of second frame parts (22) that extend from the left-and-right pair of first frame parts (21) rearwardly obliquely upwardly, and
a left-and-right pair of third frame parts (23) that extend from the left-and-right pair of second frame parts (22) rearwardly;
a seat (37) supported by the vehicle body frame (2);
a feet-putting part (34) on which feet of a driver are put, the feet-putting part (34) being disposed between the first frame parts (21) and the upper end of the front wheel (3) in a vehicle up-down direction and being disposed between the seat (37) and the front wheel (3) in the vehicle front-rear direction;
a battery (6), the battery (6) being formed in a substantially rectangular shape whose length in the vehicle up-down direction is greater than that in the vehicle front-rear direction in a side view, the battery (6) being disposed between the left-and-right pair of second frame parts (22) below the seat (37) and being disposed so that a lower end (6t) of the battery (6) is located below an upper end (34b) of the feet-putting part (34) in a posture inclined so that an upper part (6a) of the battery (6) is located at a more rearward position than a lower part (6b) of the battery (6);
a battery supporting part (130), the battery supporting part (130) being supported by the vehicle body frame (2), the battery supporting part (130) supporting the lower part (6b) of the battery (6), at least one part of the battery supporting part (130) being disposed below the upper end (34b) of the feet-putting part (34);
a swing unit (71), the swing unit (71) including:
an electric motor (5) to which electric power is supplied from the battery (6), and a rear wheel (4) that is driven by the electric motor (5) and that is disposed below the third frame parts (23); and
a pivot part (74) that swingably connects the swing unit (71) to the vehicle body frame (2) at a higher position than the feet-putting part (34);
wherein at least one part of the battery supporting part (130) is disposed in a first region (F1) surrounded by a first vertical plane (V1) that passes through a front end of the battery (6), by a horizontal plane (H1) that passes through the lower end (6t) of the battery (6), and by the battery (6) in a side view, **characterized in that** the pivot part (74) is disposed in a second region (F2) surrounded by a second vertical plane (V2) that passes through a rear end (6w) of the battery (6), by the horizontal plane (H1), and by the battery (6) in a side view.

2. A two-wheeled electric vehicle according to claim 1, **characterized in that** an inclination angle (θ1) of the battery (6) with respect to the horizontal plane (H1) is greater than an inclination angle (θ2) of each of the second frame parts (22) with respect to the horizontal plane (H1) in a side view.

3. A two-wheeled electric vehicle according to claim 1 or 2, **characterized in that** the battery (6) includes a front region (131) disposed in front of the pair of second frame parts (22) and a rear region (132) that is disposed behind the pair of second frame parts (22) and that has an area greater than an area of the front region (131) in a side view.

4. A two-wheeled electric vehicle according to any one of claims 1 to 3, **characterized in that** the swing unit (71) includes a casing (88) that houses the electric motor (5) and an inclined part that extends from a front (88a) of the casing (88) forwardly obliquely upwardly and that is connected to the pivot part (74), and
an inclination angle (θ3) of the inclined part with respect to the horizontal plane (H1) is greater than the inclination angle of the second frame part (22) with respect to the horizontal plane (H1).

5. A two-wheeled electric vehicle according to any one of claims 1 to 4, **characterized in that** the swing unit (71) includes a casing (88) that houses the electric motor (5) and a connection part (89) that extends from a front (88a) of the casing (88) upwardly and that is connected to the pivot part (74), and
the connection part (89) is located behind a forward end of the casing (88), and at least one part of the connection part (89) is located in front of the rear end (6w) of the battery (6).

6. A two-wheeled electric vehicle according to any one of claims 1 to 5, **characterized in that** the vehicle body frame (2) includes a left-and-right pair of fourth frame parts (24) disposed below the pair of third frame parts (23), and wherein the pair of fourth frame parts (24) include:
a front end part (24a) connected to the pair of second frame parts (22),
a rear end part (24b) connected to the pair of third frame parts (23),
a first intermediate part (24c) that is aligned with the battery (6) in a vehicle right-left direction, and
a second intermediate part (72) that is disposed behind the first intermediate part (24c) and to which the pivot part (74) is connected.

7. A two-wheeled electric vehicle according to any one of claims 1 to 6, **characterized by** a seat bracket (100) used to attach the seat (37) to the pair of second frame parts (22), wherein at least one part of the seat bracket (100) is disposed in a third region (F3) surrounded by a horizontal plane (H2) that passes through an upper end of the battery (6), by the first vertical plane (V1), and by the battery (6) in a side view.

8. A two-wheeled electric vehicle according to any one of claims 1 to 7, **characterized by** a stand device (135) used to maintain the two-wheeled electric vehicle in a standing posture in a state in which the front wheel (3) and the rear wheel (4) are in contact with a road surface (A1),
wherein the stand device (135) includes:
a spindle (140) that is supported by the vehicle body frame (2) below the feet-putting part (34) and that extends in a vehicle right-left direction, and
a stand member (138) having a contact member (143) displaceable to a contact position being in contact with the road surface (A1) and displaceable to a separation position separated from the road surface (A1) by being displaced around the spindle (140), and
wherein the contact member (143) occupying the contact position is located between a straight line (D1) that passes through a forward edge of the battery (6) and a straight line (D2) that passes through a rearward edge of the battery (6) in a side view.

9. A two-wheeled electric vehicle according to claim 8, **characterized in that** the stand member (138) has a U shape including a first part (141) that is connected to the spindle (140) and that extends in a vehicle right-left direction and a pair of second parts (142) extending from both ends of the first part (141) toward a rear of the vehicle, and wherein the battery (6) is disposed between the pair of second parts (142) in the vehicle right-left direction in a plan view.

## Patentansprüche

1. Ein Zwei-Rad-Elektrofahrzeug mit:
einem Vorderrad (3);
einem Fahrzeugkörper-Rahmen (2), der Fahrzeugkörper-Rahmen (2) beinhaltet:
ein linkes-und-rechtes Paar von ersten Rahmen-Teilen (21), die unter einem oberen Ende des Vorderrads (3) hinter dem Vorderrad (3) angeordnet sind, und sich in eine Fahrzeug-Vorder-Rück-Richtung erstrecken,
ein linkes-und-rechtes Paar von zweiten Rahmen-Teilen (22), die sich von dem linken-und-rechten Paar von ersten Rahmen-Teilen (21) nach hinten schräg nach oben erstrecken, und
ein linkes-und-rechtes Paar von dritten Rahmen-Teilen (23), die sich von dem linken- und-rechten Paar von zweiten Rahmen-Teilen (22) nach hinten erstrecken;
einen Sitz (37), gelagert an dem Fahrzeugkörper-Rahmen (2);
ein Fuß-Ablageteil (34), auf dem Füße eines Fahrers gesetzt sind, der Fuß-Ablageteil (34) ist zwischen den ersten Rahmen-Teilen (21) und dem oberen Ende des Vorderrads (3) in einer Fahrzeug-Oben-Unten-Richtung positioniert, und ist zwischen dem Sitz (37) und dem Vorderrad (3) in der Fahrzeug-Vorder-Rück-Richtung positioniert;
eine Batterie (6), die Batterie ist in einer wesentlichen rechteckigen Form ausgebildet, deren Länge in der Fahrzeug-Oben-Unten-Richtung größer ist als in der Fahrzeug-Vorder-Rück-Richtung in einer Seitenansicht, die Batterie (6) ist zwischen dem linken- und-rechten Paar von zweiten Rahmen-Teilen (22) unter dem Sitz (37) positioniert und ist so positioniert, dass ein unteres Ende (6t) der Batterie (6) unter einem oberen Ende (34b) des Fuß-Ablageteils (34) angeordnet ist, in einer Stellung so geneigt, dass ein oberer Teil (6a) der Batterie (6) an einer weiter hinteren Position als ein unterer Teil (6b) der Batterie (6) angeordnet ist;
einen Batterie-Lagerteil (130), der Batterie-Lagerteil (130) ist durch den Fahrzeugkörper-Rahmen (2) gelagert, der Batterie-Lagerteil (130) lagert den unteren Teil (6b) der Batterie (6), zumindest einen Teil von dem Batterie-Lagerteil (130) ist unter dem oberen Ende (34b) des Fuß-Ablageteils (34) angeordnet;
eine Schwenk-Einheit (71), die Schwenk-Einheit (71) beinhaltet:
einen Elektromotor (5), zu dem elektrische Leistung von der Batterie (6) zugeführt ist, und ein Hinterrad (4), das durch den Elektromotor (5) angetrieben ist und das unter den dritten Rahmen-Teilen (23) positioniert ist; und
ein Schwing-Teil (74), das die Schwenk-Einheit (71) mit dem Fahrzeugkörper-Rahmen (2) an einer höheren Position als den Fuß-Ablageteil (34) schwenkbar verbindet;
wobei zumindest ein Teil des Batterie-Lagerteils (130) in einem ersten Bereich (F1) angeordnet ist, der durch eine erste vertikale Ebene (V1), die sich durch ein Vorder-Ende der Batterie (6) erstreckt, durch eine horizontale Ebene (H1), die sich durch das untere Ende (6t) der Batterie (6) erstreckt, und durch die Batterie (6) in einer Seitenansicht, umgeben ist, **dadurch gekennzeichnet, dass** der Schwing-Teil (74) in einem zweiten Bereich (F2) angeordnet ist, umgeben durch eine zweite vertikale Ebene (V2), die sich durch das hintere Ende (6w) der Batterie (6), durch die horizontale Ebene (H1), und durch die Batterie (6) in einer Seitenansicht.

2. Ein Zwei-Rad-Elektrofahrzeug gemäß Anspruch 1, **dadurch gekennzeichnet, dass** ein Neigungs-Winkel (θ1) der Batterie (6) mit Bezug auf die horizontale Ebene (H1) größer ist als ein Neigungs-Winkel (θ2) von jedem der zweiten Rahmen-Teile (22) mit Bezug auf die horizontale Ebene (H1) in einer Seitenansicht.

3. Ein Zwei-Rad-Elektrofahrzeug gemäß Anspruch 1 oder 2, **dadurch gekennzeichnet, dass** die Batterie einen Vorder-Bereich (131), angeordnet vor dem Paar von zweiten Rahmen-Teilen (22), und einen Rück-Bereich (132), der hinter dem Paar von zweiten Rahmen-Teilen (22) positioniert ist und der einen Bereich, größer als ein Bereich des Vorder-Bereichs (131) in einer Seitenansicht hat, beinhaltet.

4. Ein Zwei-Rad-Elektrofahrzeug gemäß irgendeinem der Ansprüche 1 bis 3, **dadurch gekennzeichnet, dass** die Schwenk-Einheit (71) ein Gehäuse (88), das den Elektromotor (5) aufnimmt, und einen geneigten Teil, der sich von einer Front (88a) des Gehäuses (88) nach vorne schräg nach oben erstreckt und der mit dem Schwing-Teil (74) verbunden ist, beinhaltet, und
ein Neigungs-Winkel (θ3) des geneigten Teils, mit Bezug auf die horizontale Ebene (H1), ist größer als der Neigungs-Winkel des zweiten Rahmen-Teils (22), mit Bezug auf die horizontale Ebene (H1).

5. Ein Zwei-Rad-Elektrofahrzeug gemäß irgendeinem der Ansprüche 1 bis 4, **dadurch gekennzeichnet, dass** die Schwenk-Einheit (71) ein Gehäuse (88), das den Elektromotor (5) aufnimmt und ein Verbindungsteil (88), das sich von einer Front (88a) des Gehäuses (88) nach oben erstreckt und das mit dem Schwing-Teil (74) verbunden ist, beinhaltet, und
der Verbindungsteil (89) ist hinter einem vorderen Ende des Gehäuses (88) angeordnet, und zumindest ein Teil des Verbindungsteils (89) ist vor dem hinteren Ende (6w) der Batterie (6) angeordnet.

6. Ein Zwei-Rad-Elektrofahrzeug gemäß irgendeinem der Ansprüche 1 bis 5, **dadurch gekennzeichnet, dass** der Fahrzeugkörper-Rahmen (2) beinhaltet ein linkes-undrechtes Paar von vierten Rahmen-Teilen (24), angeordnet unter dem Paar von dritten Rahmen-Teilen (23), und wobei das Paar von vierten Rahmen-Teilen (24) beinhaltet:
einen Vorder-Endteil (24a), verbunden mit dem Paar von zweiten Rahmen-Teilen (22),
einen Hinter-Endteil (24b), verbunden mit dem Paar von dritten Rahmen-Teilen (23), einen ersten Zwischenteil (24c), der mit der Batterie (6) in einer Fahrzeug-Rechts-Links-Richtung ausgerichtet ist, und
einen zweiten Zwischenteil (72), der hinter dem ersten Zwischenteil (24c) angeordnet ist und mit dem der Schwing-Teil (74) verbunden ist.

7. Ein Zwei-Rad-Elektrofahrzeug gemäß irgendeinem der Ansprüche 1 bis 6, **dadurch gekennzeichnet, dass** eine Sitz-Klammer (100) verwendet ist, um den Sitz (37) an dem Paar von zweiten Rahmen-Teilen (22) anzubringen, wobei zumindest ein Teil der Sitz-Klammer (100) in einem dritten Bereich (F3) positioniert ist, der durch eine horizontale Ebene (H2), die sich durch ein oberes Ende der Batterie (6) erstreckt, durch die erste vertikale Ebene (V1), und durch die Batterie (6) in einer Seitenansicht umgeben ist.

8. Ein Zwei-Rad-Elektrofahrzeug gemäß irgendeinem der Ansprüche 1 bis 7, **gekennzeichnet durch** eine Ständer-Vorrichtung (135), verwendet, um das Zwei-Rad-Elektrofahrzeug in einer Stand-Position zu halten, in einem Zustand, in dem das Vorderrad (3) und das Hinterrad (4) in Kontakt mit einer Straßenfläche (A1) sind, wobei die Ständer-Vorrichtung (135) beinhaltet:
eine Achse (140), die **durch** den Fahrzeugkörper-Rahmen (2) unter dem Fuß-Ablageteil (34) gelagert ist und sich in eine Fahrzeug-Rechts-Links-Richtung erstreckt, und
ein Ständerelement (138), das ein Kontaktelement (143) hat, verlagerbar in eine Kontaktposition, die in Kontakt mit der Straßenfläche (A1) ist und verlagerbar in eine Trennposition, getrennt von der Straßenfläche (A1), **dadurch**, dass es um die Achse (140) verlagert ist, und
wobei das Kontaktelement (143), das die Kontaktposition besetzt, zwischen einer geraden Linie (D1), die sich **durch** eine vordere Kante der Batterie (6) und einer gerade Linie (D2), die sich **durch** eine hintere Kante der Batterie (6) in einer Seitenansicht erstreckt, angeordnet ist.

9. Ein Zwei-Rad-Elektrofahrzeug gemäß Anspruch 8, **dadurch gekennzeichnet, dass** das Ständerelement (138) eine U-Form hat, die einen ersten Teil (141), der mit der Achse (140) verbunden ist, beinhaltet und der sich in eine Fahrzeug-Rechts-Links-Richtung erstreckt, und ein Paar von zweiten Teilen (142) beinhaltet, die sich von beiden Enden des ersten Teils (141) nach hinten des Fahrzeugs erstrecken, und wobei die Batterie (6) zwischen dem Paar von zweiten Teilen (142) in der Fahrzeug-Rechts-Links-Richtung in einer Draufsicht positioniert ist.

## Revendications

1. Véhicule électrique à deux roues comprenant :
une roue avant (3) ;
un châssis de corps de véhicule (2),
le châssis de corps de véhicule (2) comprenant :
une paire gauche-droite de premières parties de châssis (21) qui sont agencées en dessous d'une extrémité supérieure de la roue avant (3) derrière la roue avant (3) et qui s'étendent en direction avant-arrière du véhicule ;
une paire gauche-droite de deuxièmes parties de châssis (22) qui s'étendent depuis la paire gauche-droite de premières parties de châssis (21) vers l'arrière et en oblique vers le haut ; et
une paire gauche-droite de troisièmes parties de châssis (23) qui s'étendent depuis la paire gauche-droite de deuxièmes parties de châssis (22) vers l'arrière ;
un siège (37) supporté par le châssis de corps de véhicule (2) ;
une pièce repose-pieds (34) sur laquelle sont posés les pieds d'un conducteur, la pièce repose-pieds (34) étant agencée entre les premières parties de châssis (21) et l'extrémité supérieure de la roue avant (3) en direction de haut en bas du véhicule et agencée entre le siège (37) et la roue avant (3) en direction avant-arrière du véhicule ;
une batterie (6), la batterie (6) étant formée selon une forme sensiblement rectangulaire dont la longueur en direction de haut en bas du véhicule est supérieure à la longueur en direction avant-arrière du véhicule en vue de côté, la batterie (6) étant agencée entre la paire gauche-droite de deuxièmes parties de châssis (22) sous le siège (37) et étant agencée de telle sorte qu'une extrémité inférieure (6t) de la batterie (6) est située sous une extrémité supérieure (34b) de la pièce repose-pieds (34) dans une posture inclinée de telle sorte qu'une partie supérieure (6a) de la batterie (6) est située dans une position plus à l'arrière qu'une partie inférieure (6b) de la batterie (6) ;
une pièce de support de batterie (130), la pièce de support de batterie (130) étant supportée par le châssis de corps de véhicule (2), la pièce de support de batterie (130) supportant la partie inférieure (6b) de la batterie (6), au moins une partie de la pièce de support de batterie (130) étant agencée sous l'extrémité supérieure (34b) de la pièce repose-pieds (34) ;
une unité basculante (71), l'unité basculante (71) comprenant :
un moteur électrique (5) auquel une alimentation électrique est fournie à partir de la batterie (6), et une roue arrière (4) qui est entraînée par le moteur électrique (5) et qui est agencée sous les troisièmes parties de châssis (23) ; et
une pièce de pivot (74) qui connecte de manière basculante l'unité basculante (71) au châssis de corps de véhicule (2) à une position plus élevée que la pièce repose-pieds (34) ;
dans lequel au moins une partie de la pièce de support de batterie (130) est agencée dans une première région (F1) entourée par un premier plan vertical (V1) qui passe à travers une extrémité frontale de la batterie (6), par un plan horizontal (H1) qui passe à travers l'extrémité inférieure (6t) de la batterie (6), et par la batterie (6) en vue de côté, **caractérisé**
**en ce que** la pièce de pivot (74) est agencée dans une deuxième région (F2) entourée par un deuxième plan vertical (V2) qui passe à travers une extrémité arrière (6w) de la batterie (6), par le plan horizontal (H1), et par la batterie (6) en vue de côté.

2. Véhicule électrique à deux roues selon la revendication 1, **caractérisé en ce qu'**un angle d'inclinaison (θ1) de la batterie (6) par rapport au plan horizontal (H1) est supérieur à un angle d'inclinaison (θ2) de chacune des deuxièmes parties de châssis (22) par rapport au plan horizontal (H1) en vue de côté.

3. Véhicule électrique à deux roues selon la revendication 1 ou 2, **caractérisé en ce que** la batterie (6) comprend une région frontale (131) agencée devant la paire de deuxièmes parties de châssis (22) et une région arrière (132) qui est agencée derrière la paire de deuxièmes parties de châssis (22) et qui présente une surface supérieure à celle de la région frontale (131) en vue de côté.

4. Véhicule électrique à deux roues selon l'une quelconque des revendications 1 à 3, **caractérisé**
**en ce que** l'unité basculante (71) comprend un boîtier (88) dans lequel est logé le moteur électrique (5) et une partie inclinée qui s'étend depuis une partie frontale (88a) du boîtier (88) vers l'avant et en oblique vers le haut et qui est connectée à la pièce de pivot (74), et
**en ce qu'**un angle d'inclinaison (θ3) de la partie inclinée par rapport au plan horizontal (H1) est supérieur à l'angle d'inclinaison de la deuxième partie de châssis (22) par rapport au plan horizontal (H1).

5. Véhicule électrique à deux roues selon l'une quelconque des revendications 1 à 4, **caractérisé**
**en ce que** l'unité basculante (71) comprend un boîtier (88) dans lequel est logé le moteur électrique (5) et une pièce de connexion (89) qui s'étend depuis une partie frontale (88a) du boîtier (88) vers le haut et qui est connectée à la pièce de pivot (74), et
**en ce que** la pièce de connexion (89) est située derrière une extrémité avant du boîtier (88), et au moins une partie de la pièce de connexion (89) est située devant l'extrémité arrière (6w) de la batterie (6).

6. Véhicule électrique à deux roues selon l'une quelconque des revendications 1 à 5, **caractérisé en ce que** le châssis de corps de véhicule (2) comprend une paire gauche-droite de quatrièmes parties de châssis (24) agencée sous la paire de troisièmes parties de châssis (23), et dans lequel la paire de quatrièmes parties de châssis (24) comprend :
une partie d'extrémité frontale (24a) connectée à la paire de deuxièmes parties de châssis (22),
une partie d'extrémité arrière (24b) connectée à la paire de troisièmes parties de châssis (23),
une première partie intermédiaire (24c) qui est alignée avec la batterie (6) en direction droite-gauche du véhicule, et
une deuxième partie intermédiaire (72) qui est agencée derrière la première partie intermédiaire (24c) et à laquelle est connectée la pièce de pivot (74).

7. Véhicule électrique à deux roues selon l'une quelconque des revendications 1 à 6, **caractérisé par** un support de siège (100) utilisé pour attacher le siège (37) à la paire de deuxièmes parties de châssis (22), dans lequel au moins une partie du support de siège (100) est agencée dans une troisième région (F3) entourée par un plan horizontal (H2) qui passe à travers une extrémité supérieure de la batterie (6), par le premier plan vertical (V1) et par la batterie (6) en vue de côté.

8. Véhicule électrique à deux roues selon l'une quelconque des revendications 1 à 7, **caractérisé par** un dispositif de béquille (135) utilisé pour maintenir le véhicule électrique à deux roues en position debout dans un état dans lequel la roue avant (3) et la roue arrière (4) sont en contact avec la surface de la route (A1),
dans lequel le dispositif de béquille (135) comprend :
un arbre (140) qui est supporté par le châssis de corps de véhicule (2) sous la pièce repose-pieds (34) et qui s'étend en direction droite-gauche du véhicule, et
un élément de béquille (138) comportant un élément de contact (143) déplaçable jusqu'à une position de contact qui présente un contact avec la surface de la route (A1) et déplaçable jusqu'à une position de séparation séparée de la surface de la route (A1) par un mouvement autour de l'arbre (140), et
dans lequel l'élément de contact (143) qui occupe la position de contact est situé entre une ligne droite (D1) qui passe à travers un bord avant de la batterie (6) et une ligne droite (D2) qui passe à travers un bord arrière de la batterie (6) en vue de côté.

9. Véhicule électrique à deux roues selon la revendication 8, **caractérisé en ce que** l'élément de béquille (138) présente une forme en U comprenant une première partie (141) qui est connectée à l'arbre (140) et qui s'étend en direction droite-gauche du véhicule et une paire de deuxièmes parties (142) qui s'étendent depuis les deux extrémités de la première partie (141) vers l'arrière du véhicule, et dans lequel la batterie (6) est agencée entre la paire de deuxièmes parties (142) en direction droite-gauche du véhicule en vue en plan.
